# FASCICULE DE BREVET EUROPEEN

(11) **EP 1 893 531 B1**
(45) Date de publication et mention de la délivrance du brevet: **18.08.2010**
(21) Numéro de dépôt: 06764638.0
(22) Date de dépôt: 17.05.2006
(51) Int. Cl.: C01B 39/00

(54) **MATERIAU INORGANIQUE PRESENTANT DES NANOPARTICULES METALLIQUES PIEGEES DANS UNE MATRICE MESOSTRUCTUREE**
ANORGANISCHES MATERIAL MIT IN EINER MESOSTRUKTURIERTEN MATRIX EINGESCHLOSSENEN METALLNANOPARTIKELN
INORGANIC MATERIAL COMPRISING METAL NANOPARTICLES TRAPPED IN A MESOSTRUCTURED MATRIX

(30) Priorité: 02.06.2005 FR 0505676
(43) Date de publication de la demande: 05.03.2008
(73) Titulaire: Institut Français du Pétrole, 92852 Rueil Malmaison Cedex (FR)
(72) Inventeur: CHAUMONNOT, Alexandra, F-69008 Lyon (FR); COUPE, Aurélie, F-77186 Noisiel (FR); SANCHEZ, Clément, F-91190 Gif sur Yvette (FR); BOISSIERE, Cédric, F-75013 Paris (FR); GROSSO, David, F-92500 Rueil Malmaison (FR)
(86) Numéro de dépôt international: PCT/FR2006/001111
(87) Numéro de publication internationale: WO 2006/128988

(56) Documents cités:
- EP-A- 0 830 314
- EP-A- 1 037 940
- US-B1- 6 387 453
- J. S. BECK, J. C. VARTULI, W. J. ROTH, M. E. LEONOWICZ, ET AL: "A new family of mesoporous molecular sieves prepared with liquid crystal templates" J. AM. CHEM. SOC., vol. 114, no. 27, 1992, pages 10834-- 10843;, XP002377423
- P. PROKEOVÁA, S. MINTOVA, , B, J. EJKAA AND T. BEIN, B: "Preparation of nanosized micro/mesoporous composites via simultaneous synthesis of Beta/MCM-48 phases" MICROPOROUS AND MESOPOROUS MATERIALS, vol. 64, no. 1-3, 2003, pages 165-174, XP002377424
- MICHEL J. VERHOEF, PATRICIA J. KOOYMAN, JAN C. VAN DER WAAL, MARCELLO S. RIGUTTO, JOOP A. PETERS, AND HERMAN VAN BEKKUM: "Partial Transformation of MCM-41 Material into Zeolites: Formation of Nanosized MFI Type Crystallites" CHEM. MATER.;, vol. 13, no. 2, 2001, pages 683-687, XP002377425
- JOAQUÍN PÉREZ-PARIENTE, , ISABEL DÍAZ AND JAVIER AG NDEZ: "Organising disordered matter: strategies for ordering the network of mesoporous materials" COMPTES RENDUS CHIMIE, vol. 8, no. 3-4, 2005, pages 569-578, XP002377426

## Description

La présente invention se rapporte au domaine des matériaux oxydes inorganiques, notamment à ceux contenant des métaux de transition et/ou de terres rares, présentant une porosité organisée et uniforme dans le domaine de la mésoporosité. Elle concerne également la préparation de ces matériaux qui sont obtenus par l'emploi de la technique de synthèse dite "aérosol.".

### Etat de la technique antérieure

Les nouvelles stratégies de synthèse permettant d'obtenir des matériaux à porosité bien définie dans une très large gamme, allant des matériaux microporeux aux matériaux macroporeux en passant par des matériaux à porosité hiérarchisée, c'est-à-dire ayant des pores de plusieurs tailles, connaissent un très large développement au sein de la communauté scientifique depuis le milieu des années 90 (G. J. de A. A. Soler-illia, C. Sanchez, B. Lebeau, J. Patarin, Chem. Rev.; 2002, 102, 4093). On obtient des matériaux dont la taille des pores est contrôlée. En particulier, le développement de méthodes de synthèse dites de "chimie douce" a conduit à l'élaboration de matériaux mésostructurés à basse température par la coexistence en solution aqueuse ou dans des solvants polaires de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse / condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif régi, entre autres, par la concentration en agent structurant peut être induit par évaporation progressive d'une solution de réactifs dont la concentration en agent structurant est le plus souvent inférieure à la concentration micellaire critique, ce qui conduit soit à la formation de films mésostructurés dans le cas d'un dépôt sur substrat (technique de dépôt de couche par immersion ou "dip-coating"), soit à la formation d'une poudre mésostructurée après atomisation de la solution (technique aérosol). A titre d'exemple, le brevet US 6.387.453 divulgue la formation de films hybrides organiques - inorganiques mésostructurés par la technique de dépôt de couche par immersion ("dip-coating"), ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposée, plusieurs familles de matériaux mésostructurés ont été développées. Pour exemple, la famille M41S initialement développée par Mobil (J. S. Beck, J. C. Vartuli; W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de surfactants ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm a largement été étudiée. Par la suite, des agents structurants de nature chimique différente ont été employés comme des macromolécules amphiphiles de type copolymères à bloc, ces dernières conduisant à des matériaux mésostructurés possédant une structure généralement hexagonale, cubique ou lamellaire, des pores de taille uniforme comprise dans une gamme de 4 à 50 nm et des parois amorphes d'épaisseur comprise dans une gamme de 3 à 7 nm.

En plus des techniques de synthèse par dépôt de couche par immersion ("dip-coating") ou "aérosol" décrites ci-dessus qui utilisent le phénomène de concentration progressive des précurseurs inorganiques et de l'agent structurant au sein de la solution où ils sont présents, les matériaux mésostructurés peuvent être obtenus par précipitation directe au sein d'une solution aqueuse ou dans des solvants de polarité marquée en jouant sur la valeur de la concentration micellaire critique de l'agent structurant. Généralement, la synthèse de ces matériaux obtenus par précipitation nécessite une étape de mûrissement en autoclave et tous les réactifs ne sont pas intégrés aux produits en quantité stoechiométrique puisqu'ils peuvent se retrouver dans le surnageant. En fonction de la structure et du degré d'organisation souhaité pour le matériau mésostructuré final, ces synthèses peuvent avoir lieu en milieu acide (pH ≤ 1) (WO 99/37705) ou en milieu neutre (WO 96/39357), la nature de l'agent structurant utilisé jouant également un rôle prépondérant. Les particules élémentaires ainsi obtenues ne présentent pas de forme régulière et sont caractérisées généralement par une taille supérieure à 500 nm.

La découverte de ces matériaux à porosité uniforme et organisée a ouvert de nouvelles perspectives quant à l'élaboration de solides innovants pour des applications potentielles dans des domaines aussi variés que la catalyse, la séparation de molécules chimiques, mais aussi l'optique, l'électronique et la biochimie. En particulier, l'étude de l'introduction de nanoparticules métalliques au sein de matrices oxydes mésostructurées essentiellement siliciques a fait l'objet d'un grand nombre de publications et brevets. En effet, l'utilisation d'un tel réseau hôte lors de la synthèse de nanoparticules métalliques a contribué aux avancées scientifiques suivantes : un meilleur contrôle de la taille et de la morphologie des nanoparticules métalliques conduisant, par exemple dans le domaine de la catalyse, à des activités et des sélectivités nouvelles en fonction des réactions étudiées ainsi qu'une meilleure dispersion des nanoparticules métalliques au sein du support grâce à une diffusion favorisée des précurseurs métalliques de part l'organisation de la porosité du réseau hôte. L'un des procédés classiques permettant l'incorporation des nanoparticules métalliques au sein d'un réseau silicique mésostructuré consiste à synthétiser, lors d'une première étape, le réseau hôte selon les méthodes de synthèse décrites précédemment puis, lors d'une seconde étape, à former à l'intérieur de la porosité ainsi créée des nanoparticules métalliques selon les méthodes non exhaustives suivantes : imprégnation de sels inorganiques précurseurs, échanges d'ions métalliques avec des ions présents à la surface du réseau hôte, greffage de complexes organométalliques, de cristallites (encore appelées "clusters") métalliques ou de nanoparticules pré-formées stabilisées par des ligands organiques, etc.. Ce procédé permet ainsi l'élaboration de solides essentiellement siliciques mésostructurés présentant au sein de leur porosité des nanoparticules d'or, de métaux nobles, d'oxyde de fer, d'oxyde d'argent etc. (A. Fukuoka, H. Araki, Y. Sakamoto, S. lnagaki, Y. Fukushima, M. Ichikawa, Inorganica Chimica Acta, 2003, 350, 371 ; S. Behrens, G. Spittel, Dalton Trans., 2005, 868 ; K. -J. Chao, M. -H. Cheng, Y. -F. Ho, P. -H. Liu, Catalysis Today, 2004, 97, 49 ; M. Frôba, R. Kôhn, G. Bouffaud, Chem. Mater., 1999, 11, 2858). Une autre option consiste à introduire les nanoparticules désirées directement lors de l'élaboration du réseau hôte mésostructuré. Il est ainsi possible d'introduire au sein des micelles formées par l'agent structurant en cours de synthèse des précurseurs de nanoparticules métalliques en jouant sur leurs propriétés hydrophobe ou électrostatique (G. Lü, D. Ji, G. Qian, Y. Qi, X. Wang, J. Suo, Applied Catalysis A: General, 2005, 280, 175 ; Ô. Dag, O. Samarskaya, N. Coombs, G. A. Ozin, J. Mater. Chem., 2003, 13, 328). L'ensemble de ces procédés conduit toutefois à une obstruction partielle voir totale de la porosité de la matrice mésostructurée, ce qui ne permet pas, in fine, de bénéficier simultanément des propriétés texturales et/ou structurales de la mésostructuration et des nanoparticules métalliques.

### Résumé de l'invention

L'invention porte sur un matériau constitué d'au moins deux particules sphériques élémentaires, chacune desdites particules sphériques comprenant des nanoparticules métalliques de taille comprise entre 1 et 300 nm et une matrice mésostructurée à base d'oxyde d'au moins un élément X choisi dans le groupe constitué par l'aluminium, le titane, le tungstène, le zirconium, le gallium, le germanium, l'étain, l'antimoine, le plomb, le vanadium, le fer, le, manganèse, l'hafnium, le niobium, le tantale, l'yttrium, le cérium, le gadolinium, l'europium et le néodyme, de préférence choisi dans le groupe constitué par l'aluminium, le titane, le zirconium, le gallium, le germanium et le cerium, ladite matrice mésostructurée ayant une taille dé pores comprise entre 1,5 et 30 nm et présentant des parois amorphes d'épaisseur comprise entre 1 et 30 nm, lesdites particules sphériques élémentaires ayant un diamètre maximal de 10 µm. On entend par nanoparticules métalliques des particules de taille nanométrique comprenant au moins un métal appartenant à la famille des létaux de transition (colonnes 3 à 12 du tableau périodique selon la classification de l'IUPAC) et/ou à la famille des métaux des terres rares (lanthanides et actinides). Ladite matrice mésostructurée à base d'oxyde d'au moins un élément X choisi dans la liste décrite ci-dessus contient avantageusement un élément X' choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, les éléments X et X' étant différents. Le matériau selon l'invention peut également contenir, en plus des nanoparticules métalliques, des nanocristaux zéolithiques piégés dans la matrice oxyde mésostructurée, lesdits nanocristaux zéolithiques ayant une taille de pores comprise entre 0,2 et 2 nm. La présente invention concerne également la préparation du matériau selon l'invention. Ledit procédé comprend a) la synthèse de particules métalliques de taille nanométrique maximale égale à 300 nm afin d'obtenir une solution colloïdale stable dans laquelle sont dispersées lesdites nanoparticules ; b) le mélange en solution d'au moins un tensioactif, d'au moins un précurseur d'au moins un élément X choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de' préférence choisi dans le groupe constitué par l'aluminium, le titane, le zirconium, le gallium, le germanium et le cérium, d'au moins une solution colloïdale stable de nanoparticules métalliques obtenue selon a), éventuellement d'au moins un précurseur d'au moins un élément X' choisi dans le groupe constitué par le silicium, l'aluminium, le titane, le , tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, les éléments X et X' étant différents, et éventuellement d'au moins une solution colloïdale stable dans laquelle sont dispersés des cristaux de zéolithes de taille nanométrique maximale égale à 300 nm ; c) l'atomisation par aérosol de ladite solution obtenue à l'étape b) pour conduire à la formation de gouttelettes sphériques de diamètre inférieur à 200 µm ; d) le séchage desdites gouttelettes et e) l'élimination d'au moins dudit tensioactif pour l'obtention d'un matériau mésostructuré dans lequel sont piégées des nanoparticules métalliques.

La structure ordonnée de la matrice du matériau selon l'invention est consécutive au phénomène de micellisation ou d'auto-assemblage par évaporation induit par la technique dite aérosol.

### Intérêt de l'invention

Le matériau selon l'invention qui est constitué de particules sphériques comprenant des nanoparticules métalliques piégées dans une matrice mésostructurée, aux parois amorphes, à base d'oxyde d'au moins dudit élément X, ladite matrice comprenant éventuellement au moins un élément X' choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme (X' étant différent de X), présente simultanément les propriétés structurales, hydro-déshydrogénante et d'oxydo-réduction propres aux particules métalliques et les propriétés structurales, texturales et éventuellement d'acido-basicité et d'oxydoréduction propres aux matériaux à base d'oxyde d'au moins dudit élément X et éventuellement propres aux matériaux oxyde à base dudit élément X' en plus dudit élément X. L'élaboration à l'échelle du nanomètre d'un matériau oxyde composite formé d'une matrice mésostructurée et de nanoparticules métalliques conduit à une connexion privilégiée des nanoparticules métalliques et de la mésoporosité uniforme et organisée de la matrice oxyde au sein d'une même particule sphérique. De plus, le matériau selon l'invention étant constitué de particules élémentaires sphériques, le diamètre de ces particules variant avantageusement de 50 nm à 10 µm et de préférence de 50 à 300 nm, la taille limitée de ces particules ainsi que leur forme homogène permet d'avoir une meilleure diffusion des réactifs et des produits de la réaction lors de l'emploi du matériau selon l'invention dans des applications industrielles potentielles comparativement à des matériaux connus de l'état de la technique se présentant sous la forme de particules élémentaires de forme non homogène, c'est-à-dire irrégulière, et de taille très supérieure à 500 nm.

D'autre part, le procédé de préparation du matériau selon l'invention qui consiste à faire interagir, préférentiellement en milieu acide, au moins un tensioactif, ionique ou non ionique, avec au moins un précurseur d'au moins un élément X choisi dans le groupe constitué par l'aluminium, le titane, le tungstène, le zirconium, le gallium, le germanium, l'étain, l'antimoine, le aplomb, le vanadium, le fer, le manganèse, l'hafnium, le niobium, le tantale, l'yttrium, le cérium, le gadolinium, l'europium et le néodyme, de préférence choisi dans le groupe constitué par l'aluminium, le titane, le zirconium, le gallium, le germanium et le cérium, au moins une solution colloïdale dans laquelle sont dispersées des particules métalliques de taille nanométrique maximale égale à 300 nm, éventuellement au moins un précurseur d'au moins un élément X' choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium (X' étant différent de X) et éventuellement au moins une solution colloïdale dans laquelle sont dispersés des cristaux de zéolithes de taille nanométrique maximale égale à 300 nm, la structure ordonnée du matériau étant consécutive au phénomène de micellisation ou d'auto-assemblage par évaporation induit par la technique dite aérosol, permet d'élaborer de façon aisée des matériaux composites mésostructurés/nanoparticules métalliques comprenant éventuellement des nanocristaux de zéolithes et de travailler avec une large gamme de nanoparticules métalliques et éventuellement de nanocristaux de zéolithes quels que soient leurs procédés de synthèse initiaux dès lors que lesdites particules, éventuellement lesdits cristaux, ont la propriété de se disperser en solution, notamment en solution acide et très préférentiellement en solution aquo-organique acide, sous la forme de particules, éventuellement sous la forme de cristaux de zéolithes, de taille nanométrique maximale égale à 300 nm.

Par ailleurs, le piégeage éventuel de nanocristaux de zéolithes dans la matrice oxyde mésostructurée en plus de celui des nanoparticules métalliques permet d'élaborer via une méthode de synthèse "one pot" des matériaux possédant simultanément une fonction acide et une fonction hydro-déshydrogénante présentant des connexions privilégiées de par la taille et la morphologie des particules sphériques élémentaires et la mésostructuration de la matrice oxyde.

De plus, par rapport aux synthèses connues des matériaux mésostructurés, la préparation du matériau selon l'invention est réalisée en continu, la durée de préparation est réduite (quelques heures contre de 12 à 24 heures, en utilisant l'autoclavage) et la stoechiométrie des espèces non volatiles présentes dans la solution initiale des réactifs est maintenue dans le matériau de l'invention.

### Exposé de l'invention

La présente invention a pour objet un matériau inorganique constitué d'au moins deux particules sphériques élémentaires, chacune desdites particules sphériques comprenant des nanoparticules métalliques de taille comprise entre 1 et 300 nm et une matrice mésostructurée à base d'oxyde d'au moins un élément X choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, ladite matrice mésostructurée ayant une taille de pores comprise entre 1,5 et 30 nm et présentant des parois amorphes d'épaisseur comprise entre 1 et 30 nm, lesdites particules sphériques élémentaires ayant un diamètre maximal de 10 µm.

Conformément à l'invention, l'élément X présent sous forme d'oxyde dans la matrice mésostructurée comprise dans chacune desdites particules sphériques du matériau selon l'invention est choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme et de préférence ledit élément X présent sous forme d'oxyde est choisi dans le groupe constitué par l'aluminium, le titane, le zirconium, le gallium, le germanium et le cérium. Ladite matrice à base d'oxyde d'au moins dudit élément X est mésostructurée : elle présente des mésopores ayant une taille uniforme comprise entre 1,5 et 30 nm et de préférence entre 1,5 et 10 nm, répartis de façon homogène et régulière dans chacune desdites particules. La matière située entre les mésopores de la matrice mésostructurée est amorphe et forme des parois, ou murs, dont l'épaisseur est comprise entre 1 et 30 nm. L'épaisseur des parois correspond à la distance séparant un pore d'un autre pore. L'organisation de la mésoporosité décrite ci-dessus conduit à une structuration de ladite matrice, laquelle peut être lamellaire, hexagonale, vermiculaire, cubique, cholestérique ou bicontinue et de façon préférée vermiculaire. Il est à noter qu'une porosité de nature microporeuse peut également résulter de l'imbrication du tensioactif, utilisé lors de la préparation du matériau selon l'invention, avec la paroi inorganique au niveau de l'interface organique-inorganique développée lors de la mésostructuration de la composante inorganique dudit matériau selon l'invention. Le matériau selon l'invention présente également une macroporosité texturale interparticuiaire.

La matrice mésostructurée présente dans chacune des particules sphériques élémentaires du matériau selon l'invention est, selon un premier mode de réalisation de la matrice, entièrement constituée d'oxyde de l'élément X choisi dans la liste décrite ci-dessus et de préférence entièrement constituée d'oxyde d'élément X choisi dans la liste préférée décrite ci-dessus (AI, Ti, Zr, Ga, Ge, Ce). Ladite matrice mésostucturée, à base d'oxyde d'au moins dudit élément X choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par l'aluminium, le titane, le zirconium, le gallium, le germanium et le cérium, comprend, selon un deuxième mode de réalisation de la matrice, au moins un élément X' choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium, les éléments X et X' étant différents. Conformément au deuxième mode de réalisation de la matrice, la proportion de l'élément X par rapport à celle de l'élément X' dans la composition de la matrice est variable : l'élément X peut être soit majoritaire soit minoritaire par rapport à l'élément X', le rapport X'/X, toujours strictement positif, pouvant atteindre une valeur de 1000. L'élément X' est de préférence le silicium. De manière très préférée, l'élément X est l'aluminium et l'élément X' est le silicium.

Conformément à l'invention, on entend par nanoparticules métalliques des particules de taille nanométrique comprenant au moins un métal appartenant à la famille des métaux de transition (colonnes 3 à 12 du tableau périodique selon la classification de l'IUPAC) et / ou à la famille des métaux des terres rares (lanthanides et actinides). Plus précisément, lesdites nanoparticules métalliques piégées dans la matrice mésostructurée présente dans chacune des particules sphériques élémentaires du matériau selon l'invention comprennent, selon un premier mode de réalisation desdites particules, au moins un métal de transition au degré d'oxydation zéro appartenant à la liste non exhaustive suivante : Au, Pd, Pt, Ni, Co, Cu, Ag, Rh, Ru, Ir, Fe, leurs mélanges et alliages dérivés. Ledit métal de transition est de préférence choisi parmi l'or, le palladium, le platine, le nickel, le cobalt, le fer et leurs mélanges et de manière très préférée ledit métal de transition est le fer ou l'or. Lesdites nanoparticules métalliques, comprennent, selon un deuxième mode de réalisation de celles-ci, au moins un oxyde de métal de transition et/ou au moins un oxyde de métal de terre rare, dans le(s)quel(s) ledit métal appartient à la liste non exhaustive suivante : Ti, Zr, Nb, Ta, Mo, W, Fe, Co, Cu, Y, La, Ni, Cr, Pd, Pt, Ce, Eu, Nd, Gd et leurs mélanges. Le métal d'au moins dudit oxyde de métal transition et / ou le métal d'au moins dudit oxyde de métal de terre rare appartient de manière préférée à la liste suivante : Ti, Zr, Nb, Mo, W, Co, Ni, Ce et leurs mélanges. De plus, les nanoparticules d'oxyde(s) métallique(s) décrites selon le deuxième mode de réalisation desdites particules métalliques contiennent préférentiellement l'élément silicium en plus de l'élément métallique sous forme oxyde. Les nanoparticules métalliques comprennent, selon un troisième mode de réalisation de celles-ci, au moins un oxyde polymétallique de structure cristallographique de type spinelle AB₂O₄, perovskite ABO₃ ou ilménite ABO₃, A et/ou B étant au moins un métal de transition et/ou de terre rare. Dans la structure de type spinelle, A et B sont respectivement des cations divalents et trivalents et dans la structure de type perovskite, A et B sont respectivement des cations divalents et tétravalents. A ou B pouvant éventuellement être un métal des groupes 1 et 2 du tableau périodique selon la classification de l'IUPAC lorsque A ou B n'est ni un métal de transition ni un métal de terre rare. S'agissant de l'ilménite ABO₃, les éléments A et B ont des tailles semblables et sont définis par la somme de leurs charges égale à +6. Pour exemple et de façon non exhaustive, les oxydes métalliques mixtes de type spinelle sont de préférence les composés Fe₃O₄, MgFe₂O₄, ZnFe₂O₄, Co₃O₄, les oxydes métalliques mixtes de type perovskite sont de préférence les composés BaTiO₃, CaTiO₃, SrZnO₃, SrTiO₃, LaFeO₃, LaCeCoO₃, SrHfO₃, SrSnO₃, BaSnO₃, et les oxydes métalliques mixtes de type ilménite sont notamment les composés NiMnO₃ et FeTiO₃. Selon ce troisième mode de réalisation desdites nanoparticules métalliques, plusieurs oxydes polymétalliques de différents types (spinelle, pérovskite, ilménite) peuvent être piégés dans la matrice mésostructurée d'une même particule sphérique. Lesdites nanoparticules métalliques comprennent, selon un quatrième mode de réalisation de celles-ci, au moins un chalcogénure formé d'un métal de transition M et d'un élément chalcogène C choisi parmi le soufre, le sélénium et le tellure, de préférence le soufre. Les chalocogénures métalliques préférés en tant que nanoparticules métalliques appartiennent à la liste non exhaustive suivante : MoS₂, NiSₓ (x = 1 ou 2), Ni₃S₂, WS₂, Co₉S₈, PtS, PdS, RuS₂, Rh₂S₃, NbSₓ (x = 1, 2 ou 3), FeS, FeS₂, Au₂S, ZnS, CdS et de façon très préférée à la liste suivante : MoS₂, NiSₓ (x = 1 ou 2), Ni₃S₂, WS₂, Co₉S₈, PtS, PdS, RuS₂, Rh₂S₃, NbSₓ (x = 1, 2 ou 3).

Conformément à l'invention, les nanoparticules métalliques représentent avantageusement de 0,1 à 30% poids, de préférence de 0,1 à 20% poids et de manière très préférée de 0,1 à 10% poids du matériau de l'invention. Les nanoparticules métalliques ont une taille maximale de 300 nm, de façon préférée elles ont une taille comprise entre 1 et 300 nm et de façon très préférée elles ont une taille comprise entre 2 et 50 nm. Lesdites nanoparticules métalliques sont piégées dans la matrice mésostructurée de chacune des particules sphériques élémentaires du matériau selon l'invention sous la forme décrite dans l'un ou plusieurs des quatre modes de réalisation desdites nanoparticules décrits ci-dessus. En particulier, la matrice mésostructurée d'une particule sphérique peut piéger des nanoparticules métalliques présentes sous plusieurs formes selon les modes de réalisation desdites nanoparticules métalliques décrits ci-dessus. Des premières nanoparticules métalliques présentes sous l'une des formes décrites ci-dessus dans l'un des quatre modes de réalisation et des deuxièmes nanoparticules métalliques présentes sous une autre forme (choisie parmi l'une des formes décrites ci-dessus dans l'un des quatre modes de réalisation) que celle sous laquelle se présentent lesdites premières nanoparticules peuvent être piégées au sein de la matrice mésostructurée d'une même particule sphérique. Par exemple, un métal de transition au degré d'oxydation zéro conformément à la forme prise par les nanoparticules métalliques selon le premier mode de réalisation décrit ci-dessus et un oxyde de métal de transition conformément à la forme prise par les nanoparticules métalliques selon le deuxième mode de réalisation décrit ci-dessus peuvent être piégés dans la matrice mésostructurée d'une même particule sphérique élémentaire du matériau selon l'invention.

De manière avantageuse, chacune des particules sphériques comprend en outre des nanocristaux zéolithiques. Lesdits nanocristaux zéolithiques sont piégés avec les nanoparticules métalliques dans la matrice mésostructurée contenue dans chacune des particules sphériques élémentaires. Conformément à ce mode de réalisation de l'invention consistant à piéger des nanocristaux zéolithiques dans la matrice mésostructurée, le matériau selon l'invention présente à la fois, dans chacune des particules sphériques élémentaires, une mésoporosité au sein de la matrice elle-même (mésopores de taille uniforme comprise entre 1,5 et 30 nm, de préférence entre 1,5 et 10 nm) et une microporosité de type zéolithique générée par les nanocristaux zéolithiques piégés dans la matrice mésostructurée. Lesdits nanocristaux zéolithiques présentent une taille de pores comprise entre 0,2 et 2 nm, de préférence entre 0,2 et 1 nm et de manière très préférée entre 0,2 et 0,6 nm. Lesdits nanocristaux zéolithiques représentent avantageusement de 0,1 à 30% poids, de préférence de 0,1 à 20% poids et de manière très préférée de 0,1 à 10% poids du matériau de l'invention. Les nanocristaux zéolithiques ont une taille maximale de 300 nm et de façon préférée ont une taille comprise entre 10 et 100 nm. Toute zéolithe et en particulier mais de façon non restrictive celles répertoriées dans "Atlas of zeolite framework types", 5^{th} revised Edition, 2001, Ch. Baerlocher, W. M. Meier, D. H. Olson peut être employée dans les nanocristaux zéolithiques présents dans chacune des particules sphériques élémentaires constituant le matériau selon l'invention. Les nanocristaux zéolithiques comprennent de préférence au moins une zéolithe choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, Mordénite, NU-87, NU-88, NU-86, NU-85, IM-5, IM-12, Ferriérite et EU-1. De manière très préférée, les nanocristaux zéolithiques comprennent au moins une zéolithe choisie parmi les zéolithes de type structural MFI, BEA, FAU, et LTA. Des nanocristaux de différentes zéolithes et notamment de zéolithes de type structuraux différents peuvent être présents dans chacune des particules sphériques constituant le matériau selon l'invention. En particulier, chacune des particules sphériques constituant le matériau selon l'invention peut comprendre de manière avantageuse au moins des premiers nanocristaux zéolithiques dont la zéolithe est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, Mordénite, NU-87, NU-88, NU-86, NU-85, IM-5, IM-12, Ferriérite et EU-1, de préférence parmi les zéolithes de type structural MFI, BEA, FAU, et LTA et au moins des seconds nanocristaux zéolithiques dont la zéolithe est différente de celle des premiers nanocristaux zéolithiques et est choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, Mordénite, NU-87, NU-88, NU-86, NU-85; IM-5, IM-12, Ferriérite et EU-1, de préférence parmi les zéolithes de type structural MFI, BEA, FAU, et LTA. Les nanocristaux zéolithiques comprennent avantageusement au moins une zéolithe soit entièrement silicique soit contenant, outre du silicium, au moins un élément T choisi parmi l'aluminium, le fer, le bore, l'indium et le gallium, de préférence l'aluminium.

Conformément à l'invention, lesdites particules sphériques élémentaires constituant le matériau selon l'invention ont un diamètre avantageusement compris entre 50 nm et 10 µm de préférence entre 50 et 300 nm. Plus précisément, elles sont présentes dans le matériau selon l'invention sous la forme d'agrégats. Le matériau selon l'invention présente avantageusement une surface spécifique comprise entre 100 et 1100 m²/g et de manière très avantageuse comprise entre 200 et 600 m²/g.

La présente invention a également pour objet la préparation du matériau selon l'invention. Ledit procédé comprend a) la synthèse de particules métalliques de taille nanométrique maximale égale à 300 nm afin d'obtenir une solution colloïdale stable dans laquelle sont dispersées lesdites nanoparticules ; b) le mélange en solution d'au moins un tensioactif, d'au moins un précurseur d'au moins un élément X choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, d'au moins une solution colloïdale de nanoparticules métalliques obtenue selon a), éventuellement d'au moins un précurseur d'au moins un élément X' choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme (X et X' étant différents) et éventuellement d'au moins une solution colloïdale stable dans laquelle sont dispersés des cristaux de zéolithes de taille nanométrique maximale égale à 300 nm ; c) l'atomisation par aérosol de ladite solution obtenue à l'étape b) pour conduire à la formation de gouttelettes sphériques de diamètre inférieur à 200 µm ; d) le séchage desdites gouttelettes et e) l'élimination d'au moins dudit tensioactif pour l'obtention d'un matériau mésostructuré dans lequel sont piégées des nanoparticules métalliques.

Conformément à l'étape a) du procédé de préparation du matériau selon l'invention, lesdites nanopaticules métalliques, dispersées en solution colloïdale, sont obtenues via les protocoles de synthèse bien connus de l'homme du métier. Ainsi, les nanoparticules, dispersées en solution colloïdale, comprenant au moins un métal de transition au degré d'oxydation zéro (premier mode de réalisation des nanoparticules décrit ci-dessus) sont généralement élaborées par réduction d'un sel inorganique dudit métal de transition, ledit sel se présentant avantageusement sous la forme MZₙ où M est ledit métal de transition, Z = CI ou Br et n = 2 ou 3, par un réducteur chimique soluble en milieu organique ou bien aqueux comme un hydrotriorganoborure, un borohydrure, une hydrazine, un alcool (méthanol, éthanol, polyol), un composé organique (aldéhyde, cétone, glucose, citrate, etc.) ou bien un gaz réducteur (hydrogène, monoxyde de carbone) (H. Bonnemann, W. Brijoux, R. Brinkmann, E. Dinjus, T. Jouber, R. B. Korall, Anges. Chem. Int. Ed. Engl., .1991, 30, 10, 1312 ; Y. Nakao, S. Fugishige, J. of Catal., 1992, 74, 323 ; H. Hirai, J. Macromol. Sci. Chem., 1979, A13, 5, 633 ; N. Toshima, T. Takahashi, H. Hirai, Chem. Lett., 1985, 1245). Une variante à cette méthode consiste à élaborer lesdites nanoparticules à partir d'une micro-émulsion d'eau dans une phase organique (M. Boutonnet, J. kizling, P. Stenius, G. Maire, Coll. And Surf., 1982, 5, 209). Il est également possible d'obtenir une solution colloïdale dans laquelle sont dispersées lesdites nanoparticules métalliques sous forme d'au moins un métal de transition au degré d'oxydation zéro en procédant par décomposition thermique d'un complexe organométallique dudit métal de transition (T. Tano, K. Esumi, K. Meguro, J. Coll. And Interface Sci., 1989, 133, 2, 530), par condensation en phase vapeur (vaporisation des atomes métalliques puis piégeage de ces derniers dans des solvants refroidis dans de l'azote liquide) (K. J. Klabunde, Platinium Metals Rev., 1992, 36, 2, 80), par photoréduction, par radiolyse ou bien par réduction électrochimique (N. Toshima, T. Takahashi, H. Hirai, Chem. Lett., 1985, 1245 ; M. Mostafavi, N. Keghouche, M. O. Delcourt, J. Belloni, Chem. Physics Lett., 1990, 167, 3, 193 ; M. T. Reetz, W. Helbig, J. am. Chem. Soc., 1994, 116, 7401). La dispersion en solution des nanoparticules métalliques peut être assurée via la présence d'agents stabilisants comme par exemple des polymères (alcool poly-vinylique, polystyrène, polyéthylène) ou copolymères ou bien des surfactants anioniques (dodécylsulfate de sodium) ou cationiques (chlorure de dodécyltriméthylammonium) ou par le solvant lui-même employé pour la mise en oeuvre de l'étape a) du procédé selon l'invention.

Les nanoparticules métalliques, dispersées en solution colloïdale, comprenant au moins un oxyde de métal de transition et/ou au moins un oxyde de métal de terre rare (deuxième mode de réalisation des nanoparticules métalliques décrit ci-dessus) ou bien comprenant au moins un oxyde polymétallique (troisième mode de réalisation des nanoparticules métalliques décrit ci-dessus) peuvent être obtenues par une première méthode consistant en une étape d'hydroxylation d'un cation métallique issu du sel dudit métal de transition ou de terre rare par réaction acido-basique (ajout d'un acide ou d'une base) ou bien par réaction de thermohydrolyse suivie d'une étape de condensation faisant intervenir des réactions d'olation ou d'oxolation conduisant aux nanoparticules. Il est également possible d'obtenir ces mêmes nanoparticules métalliques sous forme d'au moins un oxyde de métal de transition et/ou d'au moins un oxyde de métal de terre rare ou sous forme d'au moins un oxyde polymétallique, dispersées en solution colloïdale, par une deuxième méthode mise en oeuvre à partir de réactions d'hydrolyse et de condensation de précurseurs alcoxydes dudit métal de formule M(OR)ₙ où M est un métal de transition ou de terre rare et R est un groupement alkyle, généralement contrôlées par la présence en solution d'un agent complexant (voie sol-gel). L'homme du métier, voulant mettre en oeuvre l'une ou l'autre de ces méthodes, pourra à toutes fins utiles se référer aux ouvrages et publications suivants : J-P. Jolivet, Metal Oxyde Chemistry and Synthesis. From Solution. to Solid State, J. Wiley and Sons, Chichester, 2000 ; F. Schüth, K. S. W. Sing, J. Weitkamp, Handbook of Porous Solids, Wiley-VCH, 2002, Volume 3 ; J. Livage, C. Sanchez, J. Non Cristalline Solids, 1992, 145, 11. Enfin, une troisième méthode pour obtenir des nanoparticules métalliques, dispersées en solution colloïdale, comprenant au moins un oxyde de métal de transition et/ou au moins un oxyde de métal de terre rare (deuxième mode de réalisation des nanoparticules métalliques décrit ci-dessus) ou bien comprenant au moins un oxyde polymétallique (troisième mode de réalisation des nanoparticules métalliques décrit ci-dessus) consiste à mettre en oeuvre des procédés non hydrolytiques généralement à basse température, les systèmes étudiés étant constitués d'un précurseur métallique (sel ou alcoxyde) dans un solvant organique (par exemple de l'alcool benzylique) (M. Niederberger, M. H. Bard, G. D. Stucky, J. Am. Chem. Soc., 2002, 124, 46, 13642).

Dans le cas où lesdites nanoparticules métalliques comprennent non seulement au moins un oxyde de métal de transition et/ou au moins un oxyde de métal de terre rare mais également l'élément silicium, celui-ci est introduit via la combinaison, dans les protocoles de synthèse de l'une des trois méthodes décrites ci-dessus, du précurseur d'oxyde métallique avec un précurseur de silice, ce dernier pouvant être obtenu à partir de toute source de silice et avantageusement d'un précurseur silicate de sodium de formule SiO₂,NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓCl_{X} où R = H, méthyle, éthyle, x étant compris entre 0 et 4.

Dans le cas particulier où les nanoparticules métalliques piégées dans la matrice mésostructurée à base d'oxyde d'au moins dudit élément X comprennent au moins un métal de transition au degré d'oxydation zéro (premier mode de réalisation des nanoparticules), il est possible, au lieu de synthétiser des nanoparticules métalliques directement sous leur forme réduite (degré d'oxydation zéro) comme décrit plus haut conformément à l'étape a) du procédé selon l'invention, de synthétiser au cours de l'étape a) une solution colloïdale stable dans laquelle les nanoparticules métalliques y dispersées sont sous leur forme d'oxyde dudit métal de transition puis de procéder à la suite de l'étape e) du procédé selon l'invention à une étape additionnelle f) consistant en une réduction de l'oxyde dudit métal de transition de manière à ce que le métal de transition desdites nanoparticules métalliques piégées dans ladite matrice mésostructuré de chacune des particules sphériques du matériau selon l'invention soit au degré d'oxydation zéro. Les techniques de réduction employées sont similaires à celles préalablement décrites et employées au cours de l'étape a) du procédé selon l'invention lorsqu'il s'agit de synthétiser des nanoparticules métalliques comprenant au moins un métal de transition au degré d'oxydation zéro. En particulier, l'étape additionnelle f) du procédé de préparation selon l'invention peut être efficacement réalisée par réduction des nanoparticules métalliques comprenant au moins un oxyde du métal de transition sous atmosphère d'un gaz réducteur (hydrogène, monoxyde de carbone) dans une gamme de température variant de la température ambiante jusqu'à T = 800°C et de façon préférée variant de la température ambiante jusqu'à T = 550°C, le débit de gaz considéré étant fixé dans une gamme de 0,5 à 10 l/h/g de solide et de façon préférée de 0,5 à 5 l/h/g de solide.

Les nanoparticules métalliques, dispersées en solution colloïdale, comprenant au moins un sulfure de métal de transition (quatrième mode de réalisation des nanoparticules métalliques décrit plus haut) peuvent être obtenues à partir des techniques de synthèse non exhaustives suivantes : sulfuration directe des nanoparticules dudit métal de transition au degré d'oxydation zéro ou sous sa forme oxydée (A. Zak, Y. Feldman, V. Alperovich, R. Rosentsveig, R. Tenne, J. Am. Chem. Soc., 2000, 122, 11108), précipitation en solution non aqueuse d'un sel métallique dudit métal de transition en présence d'un agent sulfurant, décomposition thermique du sel dudit métal de transition en phase aqueuse comme des thiométallates.

La plupart des méthodes de synthèse citées précédemment pour la synthèse de nanoparticules métalliques, dispersées en solution colloïdale, sous l'une des quatre formes données dans les quatre modes de réalisation des nanoparticules métalliques décrits ci-dessus sont décrites dans l'article de B. L. Cushing, V. L. Kolesnichenko, C. J. O'Connor, Chem. Rev., 2004, 104, 3893.

Conformément à l'étape a) du procédé de préparation du matériau selon l'invention, lesdites nanopaticules métalliques selon l'invention peuvent être également commerciales (par exemple, fourniture par "Rhodia Electronics and Catalysis" de particules d'oxyde de métal de terres rares (La, Ce, etc.), par "Millenium Chemicals" de particules d'oxyde de titane, etc.).

Conformément à l'étape b) du procédé de préparation du matériau selon l'invention, le précurseur d'au moins un élément X choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par l'aluminium, le titane, le zirconium, le gallium, le germanium et le cérium est un précurseur d'oxyde inorganique bien connu de l'homme du métier. Le précurseur de l'élément X peut être tout composé comprenant l'élément X et pouvant libérer cet élément en solution, par exemple en solution aquo-organique, préférentiellement en solution aquo-organique acide, sous forme réactive. Dans le cas préféré où X est choisi dans le groupe constitué par l'aluminium, le titane, le zirconium, le gallium, le germanium et le cérium, le précurseur de l'élément X est avantageusement un sel inorganique dudit élément X de formule XZₙ, (n= 3 ou 4), Z étant un halogène, le groupement NO₃ ou un perchlorate, de préférence Z est le chlore. Le précurseur de l'élément X considéré peut être aussi un précurseur organométallique de formule X(OR)ₙ ou R = éthyle, isopropyle, n-butyle, s-butyle, t-butyle, etc. ou un précurseur chélaté tel que X(C₅H₈O₂)ₙ, avec n = 3 ou 4. Le précurseur de l'élément X considéré peut aussi être un oxyde ou un hydroxyde de l'élément X. En fonction de la nature de l'élément X, le précurseur de l'élément X considéré employé peut aussi être de la forme XOZ₂, Z étant un anion monovalent comme un halogène ou le groupement NO₃. De manière préférée, ledit élément X est choisi dans le groupe constitué par l'aluminium, le titane, le zirconium, le gallium, le germanium et le cérium.

Conformément au procédé de l'invention, au moins un précurseur d'au moins un élément X' est avantageusement ajouté au mélange selon l'étape b) dudit procédé. Ledit élément X' est choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, de préférence choisi dans le groupe constitué par le silicium, l'aluminium, le titane, le zirconium, le gallium, le germanium et le cérium (X et X' étant différents). De manière préférée, ledit élément X' est le silicium ; ledit précurseur silicique est alors obtenu à partir de toute source de silice et avantageusement d'un précurseur silicate de sodium de formule SiO₂,NaOH, d'un précurseur chloré de formule SiCl₄, d'un précurseur organométallique de formule Si(OR)₄ où R = H, méthyle, éthyle ou d'un précurseur chloroalcoxyde de formule Si(OR)₄₋ₓClₓ où R = H, méthyle, éthyle, x étant compris entre 0 et 4. Le précurseur silicique peut également avantageusement être un précurseur organométallique de formule Si(OR)₄₋ₓR'ₓ où R = H, méthyle, éthyle et R' est une chaîne alkyle ou une chaîne alkyle fonctionnalisée, par exemple par un groupement thiol, amino, β dicétone ou acide sulfonique, x étant compris entre 0 et 4.

Le tensioactif utilisé pour la préparation du mélange selon l'étape b) du procédé de préparation selon l'invention est un tensioactif ionique ou non ionique ou un mélange des deux. De préférence, le tensioactif ionique est choisi parmi les ions phosphonium ou ammonium et très préférentiellement parmi les sels d'ammonium quaternaire comme le bromure de céthyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent faire partie de la liste non exhaustive des familles de copolymères suivantes : les copolymères fluorés (-[CH₂-CH₂-CH₂-CH₂-O-CO-R1- avec R1 = C₄F₉, C₈F₁₇, etc.), les copolymères biologiques comme les polyacides aminés (poly-lysine, alginates, etc.), les dendrimères, les copolymères bloc constitués de chaînes de poly(oxyde d'alkylène) et tout autre copolymère à caractère amphiphile connu de l'homme du métier (S. Förster, M. Antionnetti, Adv.Mater, 1998, 10, 195-217, S. Förster, T.Plantenberg, Angew. Chem. Int. Ed, 2002, 41, 688-714, H. Cölfen, Macromol. Rapid Commun, 2001, 22, 219-252). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, deux des blocs sont constitués d'une chaîne de poly(oxyde d'alkylène) de nature hydrophile tandis que l'autre bloc, situé entre les deux blocs aux parties hydrophiles, est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)ₓ-(PPO)y-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans l'étape b) du procédé de préparation de l'invention. Pour un copolymère à quatre blocs, deux des blocs sont constitués d'une chaîne de poly(oxyde d'alkylène) de nature hydrophile et les deux autres blocs sont constitués d'une chaîne de poly(oxydes) d'alkylène de nature hydrophobe.

Selon l'étape b) du procédé de préparation selon l'invention, la solution colloïdale dans laquelle sont dispersés des cristaux de zéolithes de taille nanométrique maximale égale à 300 nm, éventuellement additionnée au milieu de synthèse, est obtenue soit par synthèse préalable, en présence d'un agent structurant, de nanocristaux zéolithiques de taille nanométrique maximale égale à 300 nm soit par l'emploi de cristaux zéolithiques, qui présentent la caractéristique de se disperser sous la forme de nanocristaux de taille nanométrique maximale égale à 300 nm en solution par exemple en solution aquo-organique acide. S'agissant de la première variante consistant en une synthèse préalable des nanocristaux zéolithiques, ceux-ci sont synthétisés selon des protocoles opératoires connus de l'homme du métier. En particulier, la synthèse de nanocristaux de zéolithe Bêta a été décrite par T. Bein et coll., Micropor. Mesopor. Mater., 2003, 64, 165. La synthèse de nanocristaux de zéolithe Y a été décrite par T. J. Pinnavaia et coll., J. Am. Chem. Soc., 2000, 122, 8791. La synthèse de nanocristaux de zéolithe Faujasite a été décrite dans Kloetstra et coll., Microporous Mater., 1996, 6, 287. La synthèse de nanocristaux de zéolithe ZSM-5 a été décrite par R. Mokaya et coll., J. Mater. Chem., 2004, 14, 863. La synthèse de nanocristaux de Silicalite (ou de type structural MFI) a été décrite dans plusieurs publications : R. de Ruiter et coll., Synthesis of Microporous Materials, Vol. I ; M. L. Occelli, H. E. Robson (eds.), Van Nostrand Reinhold, New York, 1992, 167 ; A.E. Persson, B.J. Schoeman, J. Sterte, J.-E. Otterstedt, Zeolites, 1995, 15, 611-619. On synthétise généralement des nanocristaux zéolithiques en préparant un mélange réactionnel renfermant au moins une source silicique, éventuellement au moins une source d'au moins un élément T choisi parmi l'aluminium, le fer, le bore, l'indium et le gallium, de préférence au moins une source aluminique, et au moins un agent structurant. Le mélange réactionnel est soit aqueux soit aquo-organique, par exemple un mélange eau-alcool. Le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température qui ne dépasse pas 120°C jusqu'à la formation de nanocristaux zéolithiques. A l'issue dudit traitement hydrothermal, on obtient une solution colloïdale dans laquelle les nanocristaux se trouvent à l'état dispersé. L'agent structurant peut être ionique ou neutre selon la zéolithe à synthétiser. Il est fréquent d'utiliser les agents structurants de la liste non exhaustive suivante : des cations organiques azotés, des éléments de la famille des alcalins (Cs, K, Na, etc.), des éthercouronnes, des diamines ainsi que tout autre agent structurant bien connu de l'homme de l'Art. S'agissant de la deuxième variante consistant à utiliser directement des cristaux zéolithiques, ceux-ci sont synthétisés par des méthodes connues de l'homme du métier. Lesdits cristaux zéolithiques peuvent être déjà sous la forme de nanocristaux. On utilise aussi avantageusement des cristaux zéolithiques de taille supérieure à 300 nm, par exemple comprise entre 300 nm et 200 µm qui se dispersent en solution, par exemple en solution aquo-organique, préférentiellement en solution aquo-organique acide, sous la forme de nanocristaux de taille nanométrique maximale égale à 300 nm. L'obtention de cristaux zéolithiques se dispersant sous la forme de nanocristaux de taille nanométrique maximale égale à 300 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape e) du procédé de préparation selon l'invention.

La solution dans laquelle sont mélangés au moins un tensioactif, au moins un précurseur d'au moins dudit élément X, au moins une solution colloïdale de nanoparticules métalliques obtenue selon a), éventuellement au moins un précurseur d'au moins dudit élément X' (X et X' étant des éléments différents) et éventuellement au moins une solution colloïdale stable dans laquelle sont dispersés des cristaux de zéolithes de taille nanométrique maximale égale à 300 nm, peut être acide, neutre ou basique. De préférence, ladite solution est acide et présente un pH maximal égal à 3, de préférence compris entre 0 et 2. Les acides utilisés pour obtenir une solution acide de pH maximal égal à 3 sont, de façon non exhaustive, l'acide chlorhydrique, l'acide sulfurique et l'acide nitrique. Ladite solution peut être aqueuse ou peut être un mélange eau-solvant organique, le solvant organique étant préférentiellement un solvant polaire miscible à l'eau, notamment le THF ou un alcool, dans ce dernier cas préférentiellement de l'éthanol. Ladite solution peut aussi être pratiquement organique, de préférence pratiquement alcoolique, la quantité d'eau étant telle que l'hydrolyse des précurseurs inorganiques est assurée (quantité stoechiométrique). De manière très préférée, ladite solution dans laquelle sont mélangés au moins un tensioactif, au moins un précurseur d'au moins dudit élément X, au moins une solution colloïdale de nanoparticules métalliques obtenue selon a), éventuellement au moins un précurseur d'au moins dudit élément X' (X et X' étant des éléments différents) et éventuellement au moins une solution colloïdale stable dans laquelle sont dispersés des cristaux de zéolithes de taille nanométrique maximale égale à 300 nm, est un mélange aquo-organique acide, très préférentiellement un mélange eau acide-alcool.

La quantité de nanoparticules métalliques comprenant au moins un métal appartenant à la famille des métaux de transition (colonnes 3 à 12 du tableau périodique selon la classification de l'IUPAC) et / ou à la famille des métaux des terres rares (lanthanides et actinides), est telle que lesdites nanoparticules métalliques représentent avantageusement de 0,1 à 30% poids, de préférence de 0,1 à 20% poids et de manière très préférée de 0,1 à 10% poids du matériau de l'invention.

La quantité de nanocristaux zéolithiques dispersés dans la solution colloïdale, obtenus selon la variante par synthèse préalable, en présence d'un agent structurant, de nanocristaux zéolithiques de taille nanométrique maximale égale à 300 nm ou selon la variante par l'emploi de cristaux zéolithiques, qui présentent la caractéristique de se disperser sous la forme de nanocristaux de taille nanométrique maximale égale à 300 nm en solution par exemple en solution aquo-organique acide, éventuellement introduite au cours de l'étape b) du procédé de préparation selon l'invention, est telle que les nanocristaux zéolithiques représentent avantageusement de 0,1 à 30% poids, de préférence de 0,1 à 20% poids et de manière très préférée de 0,1 à 10% poids du matériau de l'invention.

La concentration initiale en tensioactif introduit dans le mélange conformément à l'étape b) du procédé de préparation selon l'invention est définie par c₀ et c₀ est définie par rapport à la concentration micellaire critique (c_{mc}) bien connue de l'homme du Métier. La c_{mc} est la concentration limite au delà de laquelle se produit le phénomène d'auto-arrangement des molécules du tensioactif dans la solution. La concentration c₀ peut être inférieure, égale ou supérieure à la c_{mc}, de préférence elle est inférieure à la c_{mc}. Dans une mise en oeuvre préférée du procédé selon l'invention, la concentration c₀ est inférieure à la c_{mc} et ladite solution visée à l'étape b) du procédé de préparation selon l'invention est un mélange eau acide-alcool. Dans le cas où la solution visée à l'étape b) du procédé de préparation selon l'invention est un mélange eau-solvant organique, de préférence acide, il est essentiel au cours de l'étape b) du procédé de préparation selon l'invention que la concentration en tensioactif à l'origine de la mésostructuration de la matrice soit inférieure à la concentration micellaire critique de sorte que l'évaporation de ladite solution aquo-organique, préférentiellement acide, au cours de l'étape c) du procédé de préparation selon l'invention par la technique d'aérosol induise un phénomène de micellisation ou d'auto-assemblage conduisant à la mésostructuration de la matrice du matériau selon l'invention autour des nanoparticules métalliques et éventuellement des nanocristaux zéolithiques lesquels demeurent inchangés dans leur forme et leur taille au cours des étapes c) et d) du procédé de préparation de l'invention. Lorsque c₀<c_{mc}, la mésostructuration de la matrice du matériau selon l'invention et préparé selon le procédé décrit ci-dessus est consécutive à une concentration progressive, au sein de chaque gouttelette, d'au moins du précurseur dudit élément X, éventuellement d'au moins du précurseur dudit élément X', et du tensioactif, jusqu'à une concentration en tensioactif c>c_{mc} résultant d'une évaporation de la solution aquo-organique, préférentiellement acide.

De manière générale, l'augmentation de la concentration conjointe du précurseur dudit élément X, éventuellement du précurseur dudit élément X', hydrolysés, et du tensioactif provoque la précipitation du précurseur hydrolysé dudit élément X et éventuellement du précurseur hydrolysé dudit élément X' autour du tensioactif auto-organisé et en conséquence la structuration de la matrice du matériau selon l'invention. Les interactions phases inorganique / inorganique, phases organique 1 organique et phases organique 1 inorganique conduisent par un mécanisme d'auto-assemblage coopératif à la condensation du précurseur dudit élément X. hydrolysé et éventuellement du précurseur dudit élément X' hydrolysé autour du tensioactif auto-organisé. Lors de ce phénomène d'auto-assemblage, les nanoparticules métalliques et éventuellement les nanocristaux zéolitiques se retrouvent piégés dans ladite matrice mésostructurée à base d'oxyde d'au moins dudit élément X et éventuellement à base dudit élément X' (les éléments X et X' étant différents), comprise dans chacune des particules sphériques élémentaires constituant le matériau de l'invention. La technique aérosol est particulièrement avantageuse pour la mise en oeuvre de l'étape c) du procédé de préparation de l'invention de manière à contraindre les réactifs présents dans la solution initiale à interagir entre eux, aucune perte de matière hormis les solvants, c'est-à-dire la solution, préférentiellement la solution aqueuse, préférentiellement acide, et éventuellement additionnée d'un solvant polaire, n'étant possible, la totalité de l'élément X, éventuellement de l'élément X', et des nanoparticules métalliques, éventuellement des nanocristaux zéolithiques, présents initialement étant ainsi parfaitement conservée tout au long du procédé de l'invention au lieu d'être potentiellement éliminée lors des étapes de filtration et de lavages rencontrées dans des procédés de synthèse classiques connues de l'homme du métier.

L'étape d'atomisation du mélange selon l'étape c) du procédé de préparation selon l'invention produit des gouttelettes sphériques de diamètre inférieur à 200 µm et de préférence dans la gamme comprise entre 50 nm et 20 µm. La distribution en taille de ces gouttelettes est de type lognormale. Le générateur d'aérosol utilisé ici est un appareil commercial de modèle 3078 fourni par TSI. L'atomisation de la solution se fait dans une chambre dans laquelle est envoyé un gaz vecteur, un mélange O₂/N₂ (air sec), sous une pression P égale à 1,5 bars. Conformément à l'étape d) du procédé de préparation selon l'invention, on procède au séchage desdites gouttelettes. Ce séchage est réalisé par le transport desdites gouttelettes via le gaz vecteur, le mélange O₂/N₂, dans des tubes en verre, ce qui conduit à l'évaporation progressive de la solution, par exemple de la solution aquo-organique acide, et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre d'une seconde. Les particules sont alors récoltées dans un filtre et constituent le matériau selon l'invention. Une pompe placée en fin de circuit favorise l'acheminement des espèces dans le dispositif expérimental aérosol. Le séchage des gouttelettes selon l'étape d) du procédé de préparation selon l'invention est avantageusement suivi d'un passage à l'étuve à une température comprise entre 50 et 150°C. L'élimination du tensioactif et éventuellement de l'agent structurant utilisé pour synthétiser lesdits nanocristaux zéolithiques, conformément à l'étape e) du procédé de préparation selon l'invention afin d'obtenir le matériau mésostructuré selon l'invention est avantageusement réalisée par des procédés d'extraction chimique ou par traitement thermique et de préférence par calcination sous air dans une gamme de température de 300 à 1000°C et plus précisément dans une gamme de 500 à 600°C pendant une durée de 1 à 24 heures et de façon préférée pendant une durée de 2 à 6 heures.

Le matériau mésostructuré selon l'invention constitué de particules sphériques élémentaires comprenant des nanoparticules métalliques piégées dans une matrice oxyde mésostructurée, peut être obtenu sous forme de poudre, de billes, de pastilles, de granulés, ou d'extrudés, les opérations de mises en forme étant réalisées par les techniques classiques connues de l'homme du métier. De préférence, le matériau selon l'invention est obtenu sous forme de poudre, laquelle est constituée de particules sphériques élémentaires ayant un diamètre maximal de 10 µm, ce qui facilite la diffusion éventuelle des réactifs dans le cas de l'emploi du matériau selon l'invention dans une application industrielle potentielle.

Le matériau mésostructuré selon l'invention constitué de particules sphériques élémentaires comprenant des nanoparticules métalliques piégées dans une matrice oxyde mésostructurée, présentant une porosité organisée et uniforme dans le domaine de la mésoporosité, est caractérisé par plusieurs techniques d'analyses et notamment par Diffraction des Rayons X aux bas angles (DRX aux bas angles), par Diffraction des rayons X aux grands angles (DRX aux grands angles), par Volumétrie à l'Azote (BET), par Microscopie électronique à transmission (MET), par microscopie électronique à balayage (MEB) et par Spectrométrie d'émission à plasma induit par haute fréquence (ICP).

La technique de Diffraction des Rayons X aux bas angles (valeurs de l'angle 2θ comprises entre 0,5 et 6°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d (ₕₖₗ) ^{*} sin (θ) = n ^{*} λ. Cette indexation permet alors la détermination des paramètres de maille (abc) du réseau direct, la valeur de ces paramètres étant fonction de la structure, hexagonale, cubique, vermiculaire, cholestérique, lamellaire ou bicontinue obtenue. Pour exemple, le diffractogramme de Rayons X aux bas angles d'un matériau mésostructuré selon l'invention constitué de particules sphériques élémentaires comportant une matrice mésostructurée oxyde à base de silicium et d'aluminium obtenu selon le procédé de préparation selon l'invention via l'emploi du sel d'ammonium quaternaire qu'est le bromure de céthyltriméthylammonium CH₃(CH₂)₁₅N(CH₃)₃Br (CTAB) présente un pic de corrélation parfaitement résolu correspondant à la distance de corrélation entre pores d caractéristique d'une structure de type vermiculaire et définie par la relation de Bragg 2 d ^{*} sin (θ) = n ^{*} λ. La technique de Diffraction des Rayons X aux grands angles (valeurs de l'angle 2θ comprises entre 5 et 100°) permet de caractériser un solide cristallisé défini par la répétition d'un motif unitaire ou maille élémentaire à l'échelle moléculaire. Elle suit le même principe physique que celui régissant la technique de diffraction des Rayons X aux bas angles. La technique DRX aux grands angles est donc utilisée pour analyser les matériaux de l'invention car elle est tout particulièrement adaptée à la caractérisation structurale des nanoparticules métalliques pouvant être cristallisées, et éventuellement des nanocristaux zéolithiques, présents dans chacune des particules sphériques élémentaires constituant le matériau défini selon l'invention. En particulier, elle permet d'accéder à la taille des pores des nanocristaux zéolithiques lors de la présence de ces derniers. Pour exemple, un matériau mésostructuré selon l'invention, obtenu selon le procédé de préparation selon l'invention, et constitué de particules sphériques élémentaires comprenant des nanoparticules métalliques d'oxyde de fer γ-Fe₂O₃ piégées dans une matrice mésostructurée oxyde à base d'aluminium et de silicium et obtenu via l'emploi du sel d'ammonium quaternaire qu'est le bromure de céthyltriméthylammonium CH₃(CH₂)₁₅N(CH₃)₃Br (CTAB) présente, en DRX aux grands angles, le diffractogramme associé au groupe de symétrie fd3m des nanoparticules d'oxydes de fer cristallisées aux grands angles et, en DRX aux bas angles, un pic de corrélation parfaitement résolu aux petits angles associé à la structure de type vermiculaire de la matrice mésostructurée qui correspond à une distance d de corrélation entre pores. Lors de la présence, éventuelle, de nanocristaux de zéolithes piégés dans ladite matrice mésostructurée oxyde, pour exemple des nanocristaux de zéolithe du type ZSM-5 (MFI), le diffractogramme aux grand angles associés présente, en plus des pics associés auxdites nanoparticules métalliques d'oxyde de fer, les pics attribués au groupe de symétrie Pnma (N°62) de la zéolithe ZSM-5. La valeur de l'angle obtenue sur le diffractogramme RX permet de remonter à la distance de corrélation d selon la loi de Bragg : 2d*sin(θ)=n*λ.

La volumétrie à l'azote correspondant à l'adsorption physique de molécules d'azote dans la porosité du matériau via une augmentation progressive de la pression à température constante renseigne sur les caractéristiques texturales (diamètre de pores, type de porosité, surface spécifique) particulières du matériau selon l'invention. En particulier, elle permet d'accéder à la surface spécifique et à la distribution mésoporeuse du matériau. On entend par surface spécifique, la surface spécifique B.E.T. (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309. La distribution poreuse représentative d'une population de mésopores centrée dans une gamme de 1,5 à 50 nm est déterminée par le modèle Barrett-Joyner-Halenda (BJH). L'isotherme d'adsorption - désorption d'azote selon le modèle BJH ainsi obtenue est décrite dans le périodique "The Journal of American Society", 1951, 73, 373, écrit par E. P. Barrett, L. G. Joyner et P. P. Halenda. Dans l'exposé qui suit, le diamètre des mésospores φ de la matrice mésostructurée correspond au diamètre moyen à l'adsorption d'azote défini comme étant un diamètre tel que tous les pores inférieurs à ce diamètre constituent 50% du volume poreux (Vp) mesuré sur la branche d'adsorption de l'isotherme azote. De plus, l'allure de l'isotherme d'adsorption d'azote et de la boucle d'hystérésis peuvent renseigner sur la nature de la mésoporosité et sur la présence éventuelle de microporosité liée essentiellement aux nanocristaux zéolithiques lorsqu'ils sont présents dans la matrice oxyde mésostructurée. Pour exemple, l'isotherme d'adsorption d'azote relative à un matériau mésostructuré selon l'invention, obtenu selon le procédé de préparation selon l'invention et constitué de particules sphériques élémentaires comportant une matrice mésostructurée oxyde à base d'aluminium et de silicium préparée via l'emploi du sel d'ammonium quaternaire bromure de céthyltriméthylammonium CH₃(CH₂)₁₅N(CH₃)₃Br (CTAB) est caractérisée par une isotherme d'adsorption de classe IVc avec présence d'une marche d'adsorption pour des valeurs de P/P0 (où P0 est la pression de vapeur saturante à la température T) comprises entre 0,2 et 0,3 associée à la présence de pores de l'ordre de 2 à 3 nm comme confirmée par la courbe de distribution poreuse associée.

Concernant la matrice mésostructurée, la différence entre la valeur du diamètre des portes et le paramètre de maille a défini par DRX aux bas angles comme décrit ci-dessus permet d'accéder à la grandeur e où e = a - φ et est caractéristique de l'épaisseur des parois amorphes de la matrice mésostructurée comprises dans chacune des particules sphériques du matériau selon l'invention. Ledit paramètre de maille a est relié à la distance d de corrélation entre pores par un facteur géométrique caractéristique de la géométrie de la phase. Pour exemple, dans le cas d'une maille hexagonale e = a - φ avec a = 2*d/√3, dans le cas d'une structure vermiculaire e = d - φ.

L'analyse par microscopie électronique par transmission (MET) est une technique également largement utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 0,2 nm. Dans l'exposé qui suit, les photos MET seront réalisées à partir de coupes microtomes de l'échantillon afin de visualiser une section d'une particule sphérique élémentaire du matériau selon l'invention. Pour exemple, les images MET obtenues pour un matériau selon l'invention, obtenu selon le procédé de préparation selon l'invention, et constitué de particules sphériques comprenant des nanoparticules métalliques d'or au degré d'oxydation zéro piégées dans une matrice mésostructurée à base d'oxyde de titane laquelle a été préparée via l'emploi du sel d'ammonium quaternaire bromure de céthyltriméthylammonium CH₃(CH₂)₁₅N(CH₃)₃Br (CTAB) présentent au sein d'une même particule sphérique une mésostructure vermiculaire (la matière étant définie par des zones sombres) au sein de laquelle sont visualisés des objets opaques représentant les nanoparticules métalliques d'or piégées dans la matrice mésostructurée. L'analyse de l'image permet également d'accéder aux paramètres d, φ et e, caractéristiques de la matrice mésostructurée définis précédemment. II est parfois possible de visualiser également sur ce même cliché les plans réticulaires des nanoparticules métalliques, qui peuvent être cristallisées, au lieu des objets opaques cités précédemment, ainsi que les nanocristaux zéolithiques lorsqu'ils sont présents, dans la matrice mésostructurée et d'accéder ainsi à leur structure cristallographique.

La morphologie et la distribution en taille des particules élémentaires ont été établies par analyse de photos obtenues par microscopie électronique à balayage (MEB).

La structure de la matrice mésostructurée comprise dans chacune des particules du matériau selon l'invention peut être, cubique, vermiculaire, hexagonale, lamellaire, cholestérique ou bicontinue en fonction de la nature du tensioactif choisi comme agent structurant.

L'invention est illustrée au moyen des exemples qui suivent.

### Exemples

Dans les exemples qui suivent, la technique aérosol utilisée est celle décrite ci-dessus dans l'exposé de l'invention.

### Exemple 1 : Préparation d'un matériau présentant des nanoparticules métalliques d'or à 3% poids du matériau final piégées dans une matrice mésostructurée d'oxyde de titane TiO₂.

50 mg de AuNaCl₄, 2H₂O sont ajoutés à 500 ml de H₂O. La solution est portée à ébullition au bain marie. 10 mg de solution aqueuse contenant 0,5 g de Na₃(C₆H₈O₇) sont alors ajoutés. L'ensemble de la solution est laissé à ébullition jusqu'à un virement de couleur rouge de celle-ci. On obtient alors des nanoparticules d'or de diamètre moyen de l'ordre de 20 nm en suspension (J. Turkevitch, P.C. Stevenson, J. Hillier, Discuss. Faraday Soc., 1951, 11, 55). La solution est alors concentrée par évaporation jusqu'à l'obtention d'une solution de concentration 0,014 mol/I.

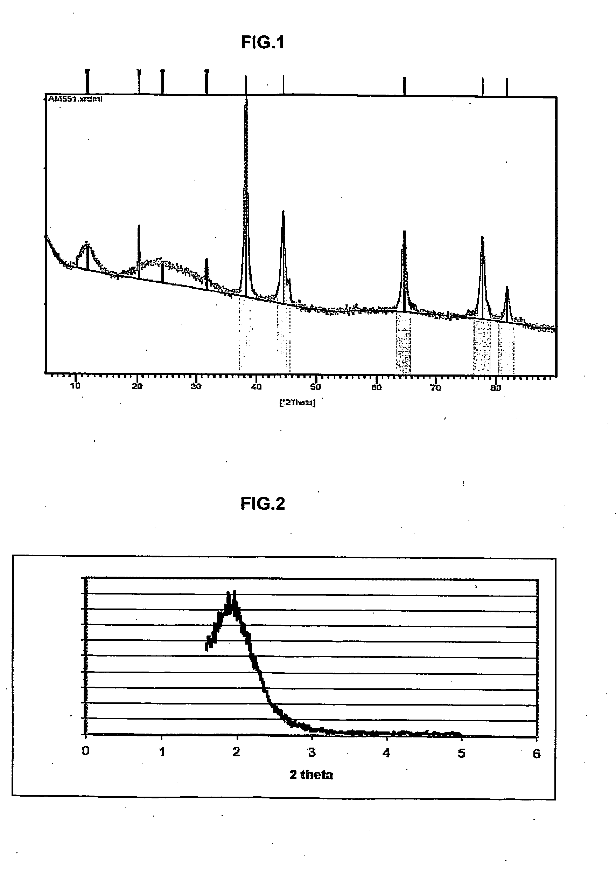

0,41 g de CTAB sont dissous dans 23 g d'éthanol à température ambiante. 0,87 g de TiCl₄ sont ajoutés à cette solution sous vigoureuse agitation. Après addition de 5 ml de la solution de nanoparticules d'or, la solution est passée aux ultrasons pendant environ une minute. 2,2 g d'H₂O sont alors ajoutés lentement. La solution est homogénéisée aux ultrasons pendant environ une minute. L'ensemble de la préparation est envoyé immédiatement dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles, par Volumétrie à l'azote, par MET et par MEB. L'analyse MET montre que le matériau final est constitué de nanoparticules d'or piégées dans une matrice d'oxyde de titane à mésoporosité organisée caractérisée par une structure vermiculaire. L'analyse par Volumétrie à l'azote conduit à une surface spécifique du matériau final de S_{BET} = 250 m²/g et à un diamètre mésoporeux caractéristique de la matrice mésostructurée d'oxyde de titane due φ = 2,6 nm. L'analyse DRX aux grands angles (figure 1) conduit à l'obtention du diffractogramme caractéristique des nanoparticules d'or. L'analyse DRX aux petits angles (figure 2) conduit à la visualisation d'un pic de corrélation associé à l'organisation vermiculaire de la matrice mésostructurée. La relation de Bragg donne 2 d * sin (1) = 1,5406, soit d = 4,4 nm. L'épaisseur des parois amorphes de la matrice mésostructurée définie par e = d - φ est donc de e = 1,8 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 2 : Préparation d'un matériau présentant des nanoparticules d'oxyde de fer à 10% poids du matériau final piégées dans une matrice mésostructurée oxyde à base d'aluminium et de silicium de rapport molaire Si/Al = 4.

On prépare 80 ml d'une solution de FeCl₃ de concentration 1mol/l et 20 ml d'une solution de FeCl₂ à une concentration de 2 mol/l en FeCl₂ et de 1 mol/l en HCl. Ces deux solutions sont mélangées et laissées sous agitation une dizaine de minutes. A l'aide d'un titromètre, on réalise la synthèse des particules d'oxyde de fer par précipitation de la solution de fer dans 500 ml d'une solution de NaNO₃ à 3 mol/l. Lors de la synthèse, le pH est maintenu à une valeur de 11 par addition simultanée d'une solution de soude de concentration 0,1 mol/l. Les particules solides sont séparées du surnageant par aimantation. Les particules sont ensuite redispersées dans une solution aqueuse d'HClO₄ à 3 mol/l et laissées 30 minutes sous agitation de manière à réaliser l'oxydation du Fe(II) résiduel. Les particules sont alors séparées du surnageant par centrifugation (10 minutes à 11000 tr/min). Cette procédure peut être réalisée plusieurs fois. Les particules sont alors redispersées dans un volume d'eau dont le pH doit être maintenu à une valeur de 1,8-2,0 de manière à obtenir une concentration en Fe3⁺ de l'ordre de 0,13 mol/l. Le diamètre des particules obtenues est compris entre 5 et 12 nm.

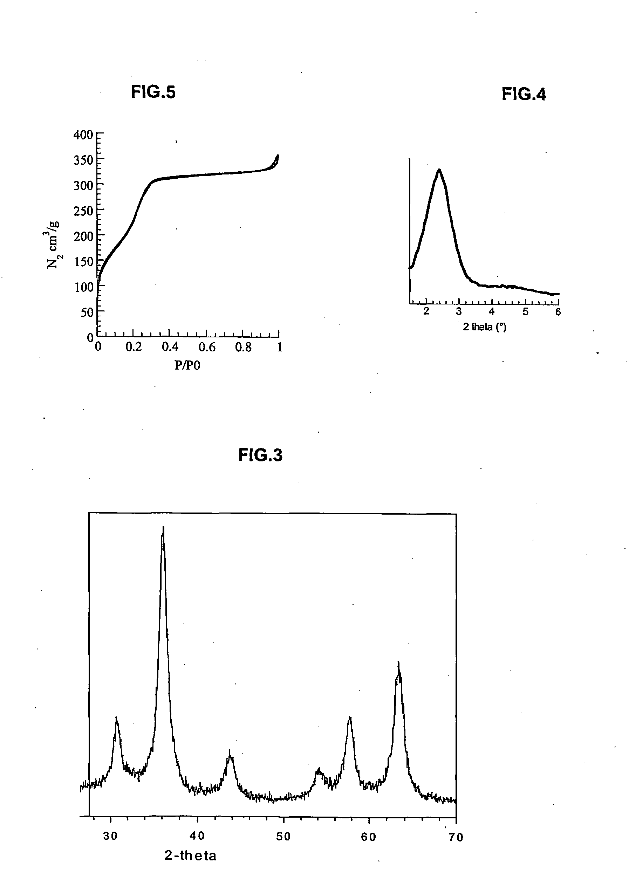

2,3 g de AlCl₃, 6H₂O sont ajoutés à une solution contenant 32,45 g d'éthanol, 16,93 g d'H₂O, 0,078 ml d'HCl 37%. Une fois le chlorure d'aluminium dissous, on ajoute à cette solution 31 ml de la solution aqueuse de particule d'oxyde de fer décrite ci-dessus. Cette solution est placé aux ultrasons pendant quelques minutes (2 à 3) avant l'ajout très lent et sous agitation vigoureuse de 7,9 g de tétraéthylorthosilicate (TEOS). On ajoute alors très lentement et sous vigoureuse agitation une solution contenant 3;08 g de CTAB préalablement dissous dans 32,45 g d'éthanol et dans 16,93 g d'H₂O. L'ensemble est maintenu sous agitation quelques minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles, par Volumétrie à l'azote, par MET, par MEB et par ICP. L'analyse MET montre que le matériau final est constitué de nanoparticules d'oxyde de fer dans une matrice aluminosilicate de rapport molaire Si/Al = 4 à mésoporosité organisée caractérisée par une structure vermiculaire. La Volumétrie d'adsorption à l'azote (figure 5) conduit à une surface spécifique du matériau final de S_{BET} = 700 m²/g et à un diamètre mésoporeux caractéristique de la matrice mésostructurée de φ = 2,5 nm. L'analyse DRX aux grands angles (figure 3) conduit à l'obtention du diffractogramme caractéristique des nanoparticules d'oxydes de fer γ-Fe₂O₃ de structure spinelle et de groupe d'espace fd3m. L'analyse DRX aux petits angles (figure 4) conduit à la visualisation d'un pic de corrélation associé à l'organisation vermiculaire de la matrice mésostructurée. La taille des nanoparticules calculée à partir de l'équation de Scherrer est de l'ordre de 8,2 nm. La relation de Bragg donne 2 d * sin (1,1) = 1,5406, soit d = 4 nm. L'épaisseur des parois amorphes de la matrice mésostructurée aluminosilicate définie par e = d - φ est donc de e = 1,5 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 3 : Préparation d'un matériau présentant des nanoparticules d'oxyde de cérium à 10% poids du matériau final piégées dans une matrice mésostructurée oxyde à base de zirconium et de silicium de rapport molaire Si/Zr = 4.

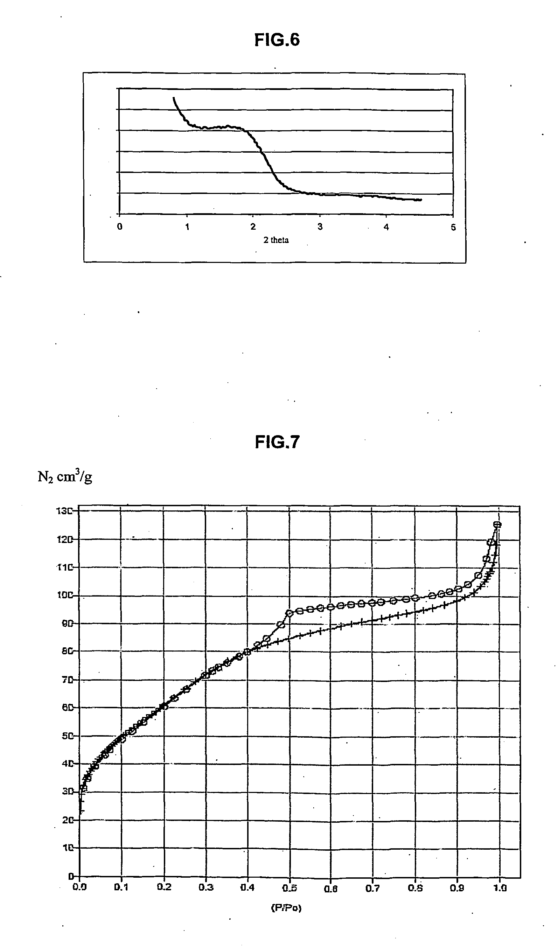

Les particules d'oxydes de cérium CeO₂ sont fournies sous forme de solution aqueuse à 60% en masse d'oxyde de cérium par la société Rhodia. Les particules ont un diamètre moyen de l'ordre de 2 à 3 nm. 12,49 g de cette solution commerciale sont alors ajoutés à 150 mi d'H₂O. On obtient alors une solution de concentration théorique de 0,29 mol/l en Ce⁴⁺. 2,2 g de ZrCl₄ sont ajoutés très lentement à 65 g d'éthanol à température ambiante. 34 g d'H₂O sont alors ajoutés très lentement et sous vigoureuse agitation. On ajoute alors 3,08 g de CTAB puis toujours très lentement 7,8 g de tétraéthylorthosilicate (TEOS). 6 ml de la solution d'oxyde de cérium de concentration 0,29 mol/l sont alors ajoutés à la solution contenant le précurseur inorganique ZrCl₄ par un système dit de "stop-flow" (ou appareil de mélange rapide). Ce dispositif permet d'obtenir un temps de mélange suffisamment long pour assurer une bonne homogénéisation des réactifs et suffisamment court pour éviter la déstabilisation de la solution. La solution ainsi obtenue est envoyée dans la pré-chambre de petit volume de l'appareil de mélange rapide, puis dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles, par Volumétrie à l'azote, par MET et par MEB et par ICP. L'analyse MET montre que le matériau final est constitué de nanoparticules d'oxyde de cérium dans une matrice SiO₂-ZrO₂ de rapport molaire Si/Zr = 4 à mésoporosité organisée caractérisée par une structure vermiculaire. L'analyse par Volumétrie à l'azote (figure 7) conduit à une surface spécifique du matériau final de S_{BET} = 220 m²/g et à un diamètre mésoporeux caractéristique de la matrice mésostructurée de φ = 2,0 nm. L'analyse DRX aux grands angles conduit à l'obtention du diffractogramme caractéristique des nanoparticules d'oxydes de cérium. L'analyse DRX aux petits angles (figure 6) conduit à la visualisation d'un pic de corrélation associé à l'organisation vermiculaire de la matrice mésostructurée. La relation de Bragg donne 2 d * sin (1,9) = 1,5406, soit d = 5 nm. L'épaisseur des parois amorphes de la matrice mésostructurée définie par e = d - φ est donc de e = 3 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 4 : Préparation d'un matériau présentant des nanoparticules polymétalliques CoFe₂O₄ de structure spinelle inverse à 5% poids du matériau final piégées dans une matrice mésostructurée oxyde à base d'aluminium et de silicium de rapport molaire Si/AI = 4.

8,1 g de FeCl₂ et 4,4 g de Co(CH₃COO)₂, 4H₂O sont ajoutés à 250 ml de 1,2-propanediol afin d'obtenir une solution de concentration en métal égale à 0,3 molli. On ajoute alors 10,35 g d'H₂O et 14,8 g de NaCH₃COO de manière à obtenir les rapports molaire H₂O/(Fe+Co) et CH₃COO-/(Fe+Co) respectivement égaux à 9 et 3. La solution est chauffée jusqu'à son point d'ébullition à 160°C avec une rampe de 6°C.min⁻¹. et laissée à reflux pendant 5 heures. La solution est laissée à refroidir à température ambiante et les particules sont séparées du surnageant par centrifugation, lavées à l'éthylène glycol et à l'acétone puis séchées à l'air à 50°C. Les particules polymétalliques de FeCo₂O₄ ainsi obtenues ont un diamètre moyen de 5 nm (S. Ammar, A. Helfen, N. Jouini, F. Fiévet, I. Rosenman, F. Villain, P. Molinié, M. Danot, J. Mater. Chem., 2001, 11, 186). Les particules ainsi récoltées sont redispersées dans un volume de 1,2-propanediol de manière à obtenir une concentration de 0,03 mol/l en particules métalliques.

1,03 g de AlCl₃, 6H₂O sont ajoutés à une solution contenant 30 g d'éthanol, 15 g d'H₂O, 0,036 ml d'HCl, et 1,4 g de P123. Une fois le chlorure d'aluminium dissous, on ajoute à cette solution 3,59 g de TEOS.

30 ml de la solution de nanoparticules de FeCo₂O₄ de concentration 0,03 mol/l sont alors ajoutés à la solution contenant les précurseurs inorganiques de silicium et d'aluminium par un système dit de "stop-flow" (ou appareil de mélange rapide). Ce dispositif permet d'obtenir un temps de mélange suffisamment long pour assurer une bonne homogénéisation des réactifs et suffisamment court pour éviter la destabilisation de la solution. La solution ainsi obtenue est envoyée dans la pré-chambre de petit volume de l'appareil de mélange rapide, puis dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles, par Volumétrie à l'azote, par MET, par MEB et par ICP. L'analyse MET montre que le matériau final est constitué de nanoparticules de CoFe₂O₄ piégées dans une matrice aluminosilicate à mésoporosité organisée caractérisée par une structure vermiculaire. L'analyse par Volumétrie à l'azote conduit à une surface spécifique du matériau final de S_{BET} = 300 m²/g et à un diamètre mésoporeux caractéristique de la matrice mésostructurée de φ = 5,6 nm. L'analyse DRX aux grands angles conduit à l'obtention d'un diffractogramme caractéristique des nanoparticules de CoFe₂O₄. L'analyse DRX aux petits angles conduit à la visualisation d'un pic de corrélation associé à l'organisation vermiculaire de la matrice mésostructurée. La relation de Bragg donne 2 d * sin (0,32) = 1,5406, soit d = 13,1 nm. L'épaisseur des parois amorphes de la matrice mésostructurée définie par e = d - φ est donc de e = 7,5 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

### Exemple 5 : Préparation d'un matériau présentant des nanocristaux de zéolite de type ZSM-5 et des nanoparticules d'oxyde de fer γ-Fe₂O₃ dans une matrice mesostructurée oxyde à base d'aluminium et de silicium de rapport molaire Si/Al = 4.

6,0 g de TEOS sont hydrolysés dans 10,4 ml de solution d'hydroxyde de tetrapropylammonium (TPAOH 20%). 1,5 ml d'eau sont alors ajoutés et la solution est ensuite agitée de manière à obtenir une solution claire. La solution est autoclavée à T = 80°C pendant 4 jours. Une fois la synthèse terminée, on récupère par centrifugation (20000 tr/min pendant une heure) des cristaux de ZSM-5, ils sont ensuite redispersés dans de l'eau (ultrasons) puis recentrifugés jusqu'à ce que la solution après redispersion ait un pH voisin de 7. La taille moyenne des cristaux de ZSM-5 est de 100 nm. On prépare 80 ml d'une solution de FeCl₃ de concentration 1 mol/l et 20 ml d'une solution de FeCl₂ à une concentration de 2 mol/l en FeCl₂ et de 1 mol/l en HCl. Ces deux solutions sont mélangées et laissées sous agitation une dizaine de minutes. A l'aide d'un titromètre, on réalise la synthèse des particules d'oxyde de fer par précipitation de la solution de fer dans 500 ml d'une solution de NaNO₃ à 3 mol/l. Lors de la synthèse, le pH est maintenu à une valeur de 11 par addition simultanée d'une solution de soude de concentration 0,1 mol/l. Les particules solides sont séparées du surnageant par aimantation. Les particules sont ensuite redispersées dans une solution aqueuse d'HClO₄ à 3 mol/l et laissées 30 minutes sous agitation de manière à réaliser l'oxydation du Fe(II) résiduel. Les particules sont alors séparées du surnageant par centrifugation (10 minutes à 110.00 tr/min). Cette procédure peut être réalisée plusieurs fois. Les particules sont alors redispersées dans un volume d'eau dont le pH doit être maintenu à une valeur de 1,8-2,0 de manière à obtenir une concentration en Fe³⁺ de l'ordre de 0,13 mol/l. Le diamètre des particules obtenues est compris entre 5 et 12 nm.

1,03 g de AlCl₃, 6H₂O sont ajoutés à une solution contenant 30 g d'éthanol, 15 g d'H₂O, 0,036 mi d'HCl et 1,4 g de P123. Une fois le chlorure d'aluminium dissous, on ajoute 3,59 g de TEOS. On laisse homogénéiser une dizaine de minutes. Puis 400 µl de la solution de cristaux zéolithiques sont ajoutées à cette solution sous vigoureuse agitation. Le pH est alors ajusté à 2 avec HCl. 12 ml de la solution d'oxyde de fer de concentration 0,13 molli sont alors ajoutés à la solution contenant les nanocristaux zéolithiques en suspension et les précurseurs inorganiques d'aluminium et de silicium par un système dit de "stop-flow" (ou appareil de mélange rapide). Ce dispositif permet d'obtenir un temps de mélange suffisamment long pour assurer une bonne homogénéisation des réactifs et suffisamment court pour éviter la destabilisation de la solution. La solution ainsi obtenue est envoyée dans la pré-chambre de petit volume de l'appareil de mélange rapide, puis dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus. La température du four de séchage est fixée à 350°C. La poudre récoltée est alors calcinée sous air pendant 5 h à T = 550°C. Le solide est caractérisé par DRX aux bas angles et aux grands angles, par Volumétrie à l'azote, par MET, par MEB et par ICP. L'analyse MET montre que le matériau final est constitué de nanocristaux de zéolithe de type ZSM-5 et de nanoparticules d'oxyde de fer γ-Fe₂O₃ piégés dans une matrice aluminosilicate à mésoporosité organisée caractérisée par une structure vermiculaire. L'analyse par Volumétrie à l'azote conduit à une surface spécifique du matériau final de S_{BET} = 300 m²/g et à un diamètre mésoporeux caractéristique de la matrice mésostructurée de φ = 5,6 nm. L'analyse DRX aux grands angles conduit à l'obtention d'un diffractogramme constitué de la superpostition des diffractogrammes caractéristiques de la zéolithe ZSM-5 et des particules d'oxyde de fer γ-Fe₂O₃. L'analyse DRX aux petits angles conduit à la visualisation d'un pic de corrélation associé à l'organisation vermiculaire de la matrice mésostructurée. La relation de Bragg donne 2 d * sin (0,32) = 1,5406, soit d = 13,1 nm. L'épaisseur des parois amorphes de la matrice mésostructurée définie par e = d - φ est donc de e = 7,5 nm. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm.

## Revendications

1. Matériau inorganique constitué d'au moins deux particules sphériques élémentaires, chacune desdites particules sphériques comprenant des nanoparticules métalliques de taille comprise entre 1 et 300 nm et une matrice mésostructurée à base d'oxyde d'au moins un élément X choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, ladite matrice mésostructurée ayant une taille de pores comprise entre 1,5 et 30 nm et présentant des parois amorphes d'épaisseur comprise entre 1 et 30 nm, lesdites particules sphériques élémentaires ayant un diamètre maximal de 10 µm.

2. Matériau selon la revendication 1 tel que l'élément X est choisi dans le groupe constitué par l'aluminium, le titane, le zirconium, le gallium, le germanium et le cérium.

3. Matériau selon la revendication 1 ou la revendication 2 tel que la taille des pores de ladite matrice mésostructurée est comprise entre 1,5 et 10 nm.

4. Matériau selon l'une des revendications 1 à 3 tel que ladite matrice mésostructurée présente une structure hexagonale, cubique, vermiculaire, lamellaire, cholestérique ou bicontinue.

5. Matériau selon l'une des revendications 1 à 4 tel que ladite matrice mésostructurée comprend au moins un élément X' choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, les éléments X et X' étant différents.

6. Matériau selon la revendication 5 tel que ledit élément X est l'aluminium et ledit élément X' est le silicium.

7. Matériau selon l'une des revendications 1 à 6 tel que lesdites nanoparticules métalliques comprennent au moins un métal appartenant à la famille des métaux de transition et / ou à la famille des métaux des terres rares.

8. Matériau selon la revendication 7 tel que lesdites nanoparticules métalliques comprennent au moins un métal de transition au degré d'oxydation zéro choisi parmi l'or, le palladium, le platine, le nickel, le cobalt, le cuivre, l'argent, le rhodium, le ruthénium, le fer, l'iridium, leurs mélanges et les alliages dérivés.

9. Matériau selon la revendication 7 tel que lesdites nanoparticules métalliques comprennent au moins un oxyde de métal de transition et/ou au moins un oxyde de métal de terre rare, dans le(s)quel(s) ledit métal est choisi parmi les métaux : Ti, Zr, Nb, Ta, Mo, W, Fe, Co, Cu, Y, La, Ni, Cr, Pd, Pt, Ce, Eu, Nd, Gd et leurs mélanges.

10. Matériau selon la revendication 7 tel que lesdites nanoparticules métalliques comprennent au moins un oxyde polymétallique de structure cristallographique de type spinelle AB₂O₄, perovskite ABO₃ ou ilménite ABO₃, A et/ou B étant au moins un métal de transition et/ou de terre rare.

11. Matériau selon la revendication 7 tel que lesdites nanoparticules métalliques comprennent au moins un chalcogénure formé d'un métal de transition M et d'un élément chalcogène C choisi parmi le soufre, le sélénium et le tellure.

12. Matériau selon l'une des revendications 1 à 11 tel que lesdites nanoparticules métalliques représentent de 0,1 à 30% poids dudit matériau.

13. Matériau selon l'une des revendications 1 à 12 tel que chacune desdites particules sphériques comprend des nanocristaux zéolithiques.

14. Matériau selon la revendication 13 tel que lesdits nanocristaux zéolithiques présentent une taille de pores comprise entre 0,2 et 2 nm.

15. Matériau selon la revendication 13 ou la revendication 14 tel que lesdits nanocristaux zéolithiques comprennent au moins une zéolithe choisie parmi les zéolithes de type structural MFI, BEA, FAU et LTA.

16. Matériau selon l'une des revendications 13 à 15 tel que lesdits nanocristaux zéolithiques comprennent au moins une zéolithe entièrement silicique.

17. Matériau selon l'une des revendications 13 à 15 tel que lesdits nanocristaux zéolithiques comprennent au moins une zéolithe contenant du silicium et de l'aluminium.

18. Matériau selon l'une des revendications 1 à 17 tel qu'il présente une surface spécifique comprise entre 100 et 1100 m²/g.

19. Procédé de préparation d'un matériau selon l'une des revendications 1 à 18 comprenant
a) la synthèse de particules métalliques de taille nanométrique maximale égale à 300 nm afin d'obtenir une solution colloïdale stable dans laquelle sont dispersées lesdites nanoparticules ; b) le mélange en solution d'au moins un tensioactif, d'au moins un précurseur d'au moins un élément X choisi dans le groupe constitué par l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme, d'au moins une solution colloïdale de nanoparticules métalliques obtenue selon a), éventuellement d'au moins un précurseur d'au moins un élément X' choisi dans le groupe constitué par le silicium, l'aluminium, le titane, le tungstène, le zirconium, le gallium, le germanium, l'étain, l'antimoine, le plomb, le vanadium, le fer, le manganèse, l'hafnium, le niobium, le tantale, l'yttrium, le cérium, le gadolinium, l'europium et le néodyme (X et X' étant différents) et éventuellement d'au moins une solution colloïdale stable dans laquelle sont dispersés des cristaux de zéolithes de taille nanométrique maximale égale à 300 nm ; c) l'atomisation par aérosol de ladite solution obtenue à l'étape b) pour conduire à la formation de gouttelettes sphériques de diamètre inférieur à 200 µm ; d) le séchage desdites gouttelettes et e) l'élimination d'au moins dudit tensioactif pour l'obtention d'un matériau mésostructuré dans lequel sont piégées des nanoparticules métalliques.

20. Procédé selon la revendication 19 tel que l'élément X est choisi dans le groupe constitué par l'aluminium, le titane, le zirconium, le gallium, le germanium et le cérium.

21. Procédé selon la revendication 19 ou la revendication 20 tel que l'élément X' est le silicium.

22. Procédé selon l'une des revendications 19 à 21 tel que ledit tensioactif est un copolymère à trois blocs, chaque bloc étant constitué d'une chaîne de poly(oxyde d'alkylène).

23. Procédé selon la revendication 22 tel que ledit copolymère à trois blocs est constitué de deux chaînes de po)y(oxyde d'éthylène) et d'une chaîne de poly(oxyde de propylène).

24. Procédé selon l'une des revendications 19 à 21 tel que ledit tensioactif est le bromure de céthyltriméthylammonium.

## Claims

1. Inorganic material that consists of at least two elementary spherical particles, each of said spherical particles comprising metal nanoparticles that are between 1 and 300 nm in size, and a mesostructured matrix with an oxide base of at least one element X that is selected from the group that consists of aluminum, titanium, tungsten, zirconium, gallium, germanium, tin, antimony, lead, vanadium, iron, manganese, hafnium, niobium, tantalum, yttrium, cerium, gadolinium, europium and neodymium, whereby said mesostructured matrix has a pore size of between 1.5 and 30 nm and has amorphous walls with a thickness of between 1 and 30 nm, said elementary spherical particles having a maximum diameter of 10 µm.

2. Material according to claim 1, such that the element X is selected from the group that consists of aluminum, titanium, zirconium, gallium, germanium and cerium.

3. Material according to claim 1 or claim 2, such that the pore size of said mesostructured matrix is between 1.5 and 10 nm.

4. Material according to one of claims 1 to 3, such that said mesostructured matrix has a hexagonal, cubic, vermicular, lamellar, cholesteric or bicontinuous structure.

5. Material according to one of claims 1 to 4, such that said mesostructured matrix comprises at least one element X' that is selected from the group that consists of silicon, aluminum, titanium, tungsten, zirconium, gallium, germanium, tin, antimony, lead, vanadium, iron, manganese, hafnium, niobium, tantalum, yttrium, cerium, gadolinium, europium and neodymium, whereby the elements X and X' are different.

6. Material according to claim 5, such that said element X is aluminum and said element X' is silicon.

7. Material according to one of claims 1 to 6, such that said metal nanoparticles comprise at least one metal that belongs to the family of transition metals and/or to the family of rare earth metals.

8. Material according to claim 7, such that said metal nanoparticles comprise at least one transition metal of zero oxidation degree that is selected from among gold, palladium, platinum, nickel, cobalt, copper, silver, rhodium, ruthenium, iron, iridium, and their mixtures and the derived alloys.

9. Material according to claim 7, such that said metal nanoparticles comprise at least one transition metal oxide and/or at least one rare earth metal oxide in which said metal is selected from among the metals: Ti, Zr, Nb, Ta, Mo, W, Fe, Co, Cu, Y, La, Ni, Cr, Pd, Pt, Ce, Eu, Nd, Gd and mixtures thereof.

10. Material according to claim 7, such that said metal nanoparticles comprise at least one polymetal oxide with crystallographic structure such as spinel AB₂O₄, perovskite ABO₃ or ilmenite ABO₃, whereby A and/or B is at least one transition metal and/or rare earth metal.

11. Material according to claim 7, such that said metal nanoparticles comprise at least one chalcongenide that is formed by a transition metal M and a chalcogen element C that is selected from among sulfur, selenium and tellurium.

12. Material according to one of claims 1 to 11, such that said metal nanoparticles have 0.1 to 30% by weight of said material.

13. Material according to one of claims 1 to 12, such that each of said spherical particles comprises zeolitic nanocrystals.

14. Material according to claim 13, such that said zeolitic nanocrystals have a pore size of between 0.2 and 2 nm.

15. Material according to claim 13 or claim 14, such that said zeolitic nanocrystals comprise at least one zeolite that is selected from among the zeolites of MFI, BEA, FAU and LTA structural type.

16. Material according to one of claims 13 to 15, such that said zeolitic nanocrystals comprise at least one completely silicic zeolite.

17. Material according to one of claims 13 to 15, such that said zeolitic nanocrystals comprise at least one zeolite that contains silicon and aluminum.

18. Material according to one of claims 1 to 17, such that it has a specific surface area of between 100 and 1100 m²/g.

19. Process for the preparation of a material according to one of claims 1 to 18, comprising a) the synthesis of metal particles of a maximum nanometric size that is equal to 300 nm so as to obtain a stable colloidal solution in which said nanoparticles are dispersed; b) the mixing in solution of at least one surfactant, at least one precursor of at least one element X that is selected from the group that consists of aluminum, titanium, tungsten, zirconium, gallium, germanium, tin, antimony, lead, vanadium, iron, manganese, hafnium, niobium, tantalum, yttrium, cerium, gadolinium, europium and neodymium, of at least one colloidal solution of metal nanoparticles obtained according to a), optionally at least one precursor of at least one element X' that is selected from the group that consists of silicon, aluminum, titanium, tungsten, zirconium, gallium, germanium, tin, antimony, lead, vanadium, iron, manganese, hafnium, niobium, tantalum, yttrium, cerium, gadolinium, europium and neodymium, (whereby X and X' are different), and optionally at least one stable colloidal solution in which crystals of zeolites of a maximum nanometric size that is equal to 300 nm are dispersed; c) the aerosol spraying of said solution that is obtained in stage b) to lead to the formation of spherical droplets with a diameter of less than 200 µm; d) the drying of said droplets, and e) the elimination of at least said surfactant for obtaining a mesostructured material in which metal nanoparticles are trapped.

20. Process according to claim 19, such that the element X is selected from the group that consists of aluminum, titanium, zirconium, gallium, germanium and cerium.

21. Process according to claim 19 or claim 20, such that the element X' is silicon.

22. Process according to one of claims 19 to 21, such that said surfactant is a three-block copolymer, whereby each block consists of a poly(alkylene oxide) chain.

23. Process according to claim 22, such that said three-block copolymer consists of two poly(ethylene oxide) chains and one poly(propylene oxide) chain.

24. Process according to one of claims 19 to 21, such that said surfactant is cetyltrimethyl ammonium bromide.

## Patentansprüche

1. Anorganisches Material, das aus mindestens zwei kugelförmigen Elementarteilchen besteht, wobei jedes der kugelförmigen Teilchen metallische Nanoteilchen mit einer Größe in Bereich zwischen 1 und 300 nm umfasst und einer mesostrukturierten Matrix auf der Basis eines Oxids mindestens eines Elements X, das ausgewählt ist aus der Gruppe bestehend aus Aluminium, Titan, Wolfram, Zirconium, Gallium, Germanium, Zinn, Antimon, Blei, Vanadium, Eisen, Mangan, Hafnium, Niob, Tantal, Yttrium, Cer, Gadolinium, Europium und Neodym, wobei die mesostrukturierte Matrix eine Porengröße im Bereich zwischen 1,5 und 30 nm hat und amorphe Wände mit einer Dicke im Bereich zwischen 1 und 30 nm aufweist, wobei die kugelförmigen Elementarteilchen einen maximalen Durchmesser von 10 µm haben.

2. Material nach Anspruch 1, wobei das Element X ausgewählt ist aus der Gruppe bestehend aus Aluminium, Titan, Zirconium, Gallium, Germanium und Cer.

3. Material nach Anspruch 1 oder nach Anspruch 2, wobei die Porengröße der mesostrukturierten Matrix im Bereich zwischen 1,5 und 10 nm liegt.

4. Material nach einem der Ansprüche 1 bis 3, wobei die mesostrukturierte Matrix eine hexagonale, kubische, vermikulare, lamellare, cholesterische oder bikontinuierliche Struktur aufweist.

5. Material nach einem der Ansprüche 1 bis 4, wobei die mesostrukturierte Matrix mindestens ein Element X' umfasst, das ausgewählt ist aus der Gruppe bestehend aus Silicium, Aluminium, Titan, Wolfram, Zirconium, Gallium, Germanium, Zinn, Antimon, Blei, Vanadium, Eisen, Mangan, Hafnium, Niob, Tantal, Yttrium, Cer, Gadolinium, Europium und Neodym, wobei die Elemente X und X' verschieden sind.

6. Material nach Anspruch 5, wobei das Element X Aluminium ist und das Element X' Silicium ist.

7. Material nach einem der Ansprüche 1 bis 6, wobei die metallischen Nanoteilchen mindestens ein Metall umfassen, das zur Familie der Übergangsmetalle und/oder zur Familie der Seltenerdmetalle gehört.

8. Material nach Anspruch 7, wobei die metallischen Nanoteilchen mindestens ein Übergangsmetall mit Oxidationsgrad Null umfassen, das ausgewählt ist aus Gold, Palladium, Platin, Nickel, Cobalt, Kupfer, Silber, Rhodium, Ruthenium, Eisen, Iridium, deren Gemischen und den abgeleiteten Legierungen.

9. Material nach Anspruch 7, wobei die metallischen Nanoteilchen mindestens ein Übergangsmetalloxid und/oder mindestens ein Seltenerdmetalloxid umfassen, bei dem (bei denen) das Metall aus den folgenden Metallen ausgewählt ist: Ti, Zr, Nb, Ta, Mo, W, Fe, Co, Cu, Y, La, Ni, Cr, Pd, Pt, Ce, Eu, Nd, Gd und deren Gemischen.

10. Material nach Anspruch 7, wobei die metallischen Nanoteilchen mindestens ein polymetallisches Oxid mit kristallographischer Struktur vom Typ Spinell AB₂O₄, Perovskit ABO₃ oder Ilmenit ABO₃ umfassen, wobei A und/oder B mindestens ein Übergangs- und/oder Seltenerdmetall ist.

11. Material nach Anspruch 7, wobei die metallischen Nanoteilchen mindestens ein Chalkogenid umfassen, das aus einem Übergangsmetall M und einem Chalkogenelement C gebildet ist, das ausgewählt ist aus Schwefel, Selen und Tellur.

12. Material nach einem der Ansprüche 1 bis 11, wobei die metallischen Nanoteilchen 0,1 bis 30 Gew.-% des Materials darstellen.

13. Material nach einem der Ansprüche 1 bis 12, wobei jedes der kugelförmigen Teilchen zeolithische Nanokristalle umfasst.

14. Material nach Anspruch 13, wobei die zeolithischen Nanokristalle eine Porengröße im Bereich zwischen 0,2 und 2 nm aufweisen.

15. Material nach Anspruch 13 oder Anspruch 14, wobei die zeolithischen Nanokristalle mindestens einen Zeolithen umfassen, der ausgewählt ist aus den Zeolithen vom Strukturtyp MFI, BEA, FAU und LTA.

16. Material nach einem der Ansprüche 13 bis 15, wobei die zeolithischen Nanokristalle mindestens einen vollständig silicischen Zeolithen umfassen.

17. Material nach einem der Ansprüche 13 bis 15, wobei die zeolithischen Nanokristalle mindestens einen Zeolithen umfassen, der Silicium und Aluminium enthält.

18. Material nach einem der Ansprüche 1 bis 17, wobei es eine spezifische Oberfläche im Bereich zwischen 100 und 1.100 m²/g aufweist.

19. Verfahren zur Herstellung eines Materials nach einem der Ansprüche 1 bis 18, umfassend a) die Synthese von metallischen Teilchen mit einer maximalen Nanometergröße gleich 300 nm, um eine stabile Kolloidlösung zu erhalten, in der die Nanoteilchen dispergiert sind; b) das Mischen in Lösung mindestens eines grenzflächenaktiven Stoffs, mindestens eines Vorläufers mindestens eines Elements X, ausgewählt aus der Gruppe bestehend aus Aluminium, Titan, Wolfram, Zirconium, Gallium, Germanium, Zinn, Antimon, Blei, Vanadium, Eisen, Mangan, Hafnium, Niob, Tantal, Yttrium, Cer, Gadolinium, Europium und Neodym, mindestens einer nach a) erhaltenen Kolloidlösung aus metallischen Nanoteilchen, gegebenenfalls mindestens eines Vorläufers mindestens eines Elements X', das ausgewählt ist aus der Gruppe bestehend aus Silicium, Aluminium, Titan, Wolfram, Zirconium, Gallium, Germanium, Zinn, Antimon, Blei, Vanadium, Eisen, Mangan, Hafnium, Niob, Tantal, Yttrium, Cer, Gadolinium, Europium und Neodym (wobei X und X' verschieden sind) und gegebenenfalls mindestens einer stabilen Kolloidlösung in der Kristalle von Zeolithen mit einer maximalen Nanometergröße gleich 300 nm dispergiert sind; c) die Aerosolzerstäubung der in Schritt b) erhaltenen Lösung, um zur Bildung von kugelförmigen Tröpfchen mit einem Durchmesser von weniger als 200 µm zu führen; d) das Trocknen der Tröpfchen und e) das Entfernen mindestens des grenzflächenaktiven Stoffs zum Erhalt eines mesostrukturierten Materials, in dem metallische Nanoteilchen gefangen sind.

20. Verfahren nach Anspruch 19, wobei das Element X ausgewählt ist aus der Gruppe bestehend aus Aluminium, Titan, Zirconium, Gallium, Germanium und Cer.

21. Verfahren nach Anspruch 19 oder Anspruch 20, wobei das Element X' Silicium ist.

22. Verfahren nach einem der Ansprüche 19 bis 21, wobei der grenzflächenaktive Stoff ein Dreiblockcopolymer ist, wobei jeder Block aus einer Poly(alkylenoxid)kette besteht.

23. Verfahren nach Anspruch 22, wobei das Dreiblockcopolymer aus zwei Poly(ethylenoxid)ketten und einer Poly(propylenoxid)kette besteht.

24. Verfahren nach einem der Ansprüche 19 bis 21, wobei der grenzflächenaktive Stoff Cethyltrimethylammoniumbromid ist.
